(19) Europäisches Patentamt
European Patent Office
Office européen des brevets

(11) **EP 4 345 072 A1**

(12) **EUROPÄISCHE PATENTANMELDUNG**

(43) Veröffentlichungstag:
**03.04.2024 Patentblatt 2024/14**

(21) Anmeldenummer: **22198391.9**

(22) Anmeldetag: **28.09.2022**

(51) Internationale Patentklassifikation (IPC):
***C03B 23/07*** (2006.01)     ***C03C 3/06*** (2006.01)

(52) Gemeinsame Patentklassifikation (CPC):
**C03B 23/07; C03C 3/06;** C03B 2201/03;
C03C 2203/40; C03C 2203/44

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Heraeus Quarzglas GmbH & Co. KG 63450 Hanau (DE)**

(72) Erfinder:
• **Lehmann, Walter 63801 Kleinostheim (DE)**

• **Gromann, Boris 63801 Kleinostheim (DE)**
• **Hofmann, Achim 63801 Kleinostheim (DE)**
• **Söhn, Matthias 63801 Kleinostheim (DE)**
• **Visnow, Eduard 63801 Kleinostheim (DE)**

(74) Vertreter: **Heraeus IP Heraeus Business Solutions GmbH Intellectual Property Heraeusstraße 12-14 63450 Hanau (DE)**

(54) **ROHR AUS QUARZGLAS UND VERFAHREN ZUR HERSTELLUNG DESSELBEN**

(57)     Dickwandige Rohre aus Quarzglas mit einem Rohr-Außendurchmesser $T_a$, im Bereich von 300 bis 500mm, einem Rohr-Innendurchmesser Ti im Bereich von 250 und 450mm und einer Rohr-Wanddicke $(T_a-T_i)/2$ im Bereich von 20mm bis 80mm, sind bekannt. Um davon ausgehend ein dickwandiges Rohr aus Quarzglas bereitzustellen, das möglichst keine Partikel und Blasen enthält, und dessen Oberfläche möglichst frei von Verunreinigungen und Beschädigungen ist, wird vorgeschlagen, dass das Quarzglasrohr eine feuerpolierte Innenmantelfläche und eine feuerpolierte Außenmantelfläche aufweist, und dass das Quarzglas des Quarzglasrohres eine Doppelbrechung von weniger als 20 nm/cm aufweist, gemessen in einem Abstand von 0,4mm unterhalb der Außenmantelfläche über eine Messlänge von 10cm.

**Fig. 1**

EP 4 345 072 A1

**Beschreibung**

Technisches Gebiet

Die vorliegende Erfindung betrifft ein Rohr aus Quarzglas mit einem Rohr-Außendurchmesser $T_a$, einem Rohr-Innendurchmesser $T_i$, einer Rohr-Wanddicke $((T_a-T_i)/2)$, einer Außenmantelfläche und einer Innenmantelfläche.

Außerdem betrifft die Erfindung ein Verfahren zur Herstellung eines Rohres aus Quarzglas. Insbesondere betrifft die Erfindung ein Verfahren zur Herstellung eines Rohres aus Quarzglas durch Umformen eines Hohlzylinders, der eine Hohlzylinderbohrung, einen Außendurchmesser $C_a$, einen Innendurchmesser $C_i$ und eine Wandstärke aufweist, die mindestens 20 mm beträgt, indem dieser um eine Rotationsachse rotierend kontinuierlich mit einer relativen Vorschubgeschwindigkeit Vc einer im Innenraum eines elektrisch beheizten Ofens ausgebildeten Heizzone zugeführt, darin bereichsweise erweicht, und der erweichte Bereich unter der Wirkung eines in der Hohlzylinderbohrung anliegenden Gasdrucks in Umfangsrichtung gedehnt und aus dem erweichten Bereich kontinuierlich ein Rohrstrang mit einem Rohr-Außendurchmesser $T_a$, einem Rohr-Innendurchmesser $T_i$ und einer Rohr-Wanddicke geformt und mit einer Abzugsgeschwindigkeit $V_T$ abgezogen wird.

Stand der Technik

Mittels derartiger Verfahren und Vorrichtungen werden Hohlzylinder aus Glas; insbesondere aus Quarzglas, in einem oder in mehreren Heiß-Umformschritten zu Rohren umgeformt, wobei die radialen Rohr-Abmessungen gegenüber den radialen Abmessungen des Hohlzylinders verändert werden. Dabei wird ein um seine Längsachse rotierender Ausgangs-Hohlzylinder zonenweise erweicht und dabei unter Einwirkung einer radial nach außen gerichteten Kraft entweder gegen ein Formwerkzeug gedehnt, das in vorgegebenem radialem Abstand zur Rohrlängsachse angeordnet ist, oder er wird werkzeugfrei umgeformt. Die radial nach außen gerichtete Kraft basiert auf der Zentrifugalkraft und/oder auf einem Innen-Überdruck in der Hohlzylinder-Innenbohrung (auch als "Gasdruck" bezeichnet).

Die Begriffe "Innenbohrung" oder "Bohrung" in Verbindung mit einem Rohr oder Hohlzylinder besagen nicht, dass die Innenbohrung oder Bohrung durch einen Bohrvorgang erzeugt worden ist.

Hinsichtlich der Beheizung des Ausgangs-Hohlzylinders kann zwischen einer flammenbasierten Heizzone und einem elektrisch beheizten Ofen unterschieden werden. Quarzglas ist ein guter thermischer Isolator, so dass flammenbasierte Heizzonen, bei denen die Erwärmung der Oberfläche vorwiegend auf Rekombinationsreaktionen mit geringer Eindringtiefe der Heizwirkung beruht, auf das Umformen von Ausgangs-Hohlzylindern mit geringen Wandstärken limitiert sind, beispielsweise von Wandstärken von weniger als 10 mm. Demgegenüber ermöglicht ein elektrisch beheizter Ofen einen höheren und auch über eine größere Strecke homogenen Wärmeeintrag, da die Infrarotstrahlung tief ins Glas eindringen kann("Heißwandreaktor") und nicht in den Raum entweichen kann, wogegen flammenbasierte Heizzonen nur die Oberfläche erwärmen, da sie kaum Infrarotstrahlung abgeben.

Grundsätzlich werden eine hohe Maßhaltigkeit und Oberflächenqualität des abgezogenen Rohrstrangs angestrebt. Für eine hohe Oberflächenqualität spricht das werkzeugfreie Umformen. Denn durch den Kontakt mit dem Formwerkzeug sind Streifenbildung an der Oberfläche und Partikel-Ablagerung durch Abrieb unvermeidlich.

Das Einhalten der Maßhaltigkeit ist hingegen in der Regel durch Einsatz eines Formwerkzeugs einfacher erreichbar. In jedem Fall ist die laufende Erfassung und kontinuierliche Regelung einer radialen Abmessung des Rohrstrangs, wie dem Außendurchmesser, dem Innendurchmessers oder der Wanddicke unumgänglich. Als Stellgröße einer solchen Regelung sind der Gasdruck, die relative Vorschubgeschwindigkeit zwischen Hohlzylinders und Heizzone und die Temperatur in der Heizzone gebräuchlich.

Ein Verfahren zur Herstellung von Quarzglasrohren der eingangs genannten Gattung ist aus der JP 2010-111557 A bekannt. Dabei wird ein dickwandiger Quarzglas-Hohlzylinder mit einem Außendurchmesser von 200 mm mit horizontal orientierter Längsachse kontinuierlich und unter Rotation mit einer Vorschubgeschwindigkeit von 4 cm/min einem Heizofen zugeführt und darin zonenweise auf eine Temperatur um 2100°C erweicht. Innerhalb des Heizofens sind in einem einstellbaren radialen Abstand zur Rohr-Längsachse wassergekühlte Grafitplatten angeordnet, die als Formwerkzeug dienen. Infolge von Überdruck innerhalb des Hohlzylinders wird das erweichte Quarzglas gegen die Graphitplatten geblasen und dabei zu einem Rohrstrang umgeformt, der mit einer Abzugsgeschwindigkeit von 12 cm/min aus dem Heizofen abgezogen wird. Dabei löst sich der Rohrstrang von den Graphitplatten, wodurch es noch zu Durchmesseränderungen kommen kann, die von den Prozessbedingungen abhängen. Um eine davon unabhängige Regelung des Rohrstrang-Außendurchmessers auf einen Sollwert von 340 mm zu erreichen, sind zwei Kameras vorgesehen, die seitlich links und rechts des Rohrstrangs angeordnet sind und die eine Abbildung der linken Umfangslinie des Rohrstrangs beziehungsweise eine Abbildung der rechten Umfangslinie des Rohrstrangs erzeugen. Aus den Abbildungen wird mittels Bildverarbeitung laufend der Außendurchmesser des Rohrstrangs als Regelgröße der Regelung ermittelt. Als Stellgröße der Regelung dient der radiale Abstand der wassergekühlten Grafitplatten zur Rohr-Längsachse, der mittels einer motorischen Formbackennachführung einstellbar ist.

Die Druckschriften US 2017/327403 A1 und JP 2007-001811 A beschreiben weitere Methoden zur Herstellung von Quarzglasrohren mit großem Durchmesser unter Einsatz eines Formwerkzeugs, wie beispielsweise Graphitplatten.

Insbesondere wegen der geringen Wärmeleitfähigkeit von Quarzglas ist die Herstellung von Quarzglasrohren mit großem Außendurchmesser und gleichzeitig großer Wandstärke in reproduzierbar guter Qualität ist besonders schwierig. Derartige Quarzglasrohre werden im Folgenden auch kurz als "dickwandig" charakterisiert. Für deren Herstellung werden häufig Schmelzformen, Schmelztiegel und Formwerkzeuge benötigt, die mit dem Quarzglas in Kontakt kommen.

So ist beispielsweise aus der CN 111792821 A ein Tiegelzieh-Verfahren zur Herstellung von dickwandigen Quarzglasrohren bekannt, bei dem in einem Tiegel aus refraktärem Werkstoff ein $SiO_2$-haltiges Ausgangsmaterial erweicht wird, und die erweichte Quarzglasmasse durch eine Ziehdüse im Tiegelboden als rohrförmiger Quarzglas-Strang kontinuierlich mit einer Ziehgeschwindigkeit im Bereich von 5 bis 30 mm/min nach unten abgezogen wird. Unterhalb der Ziehdüse greift an der Zylindermantelfläche des Quarzglas-Strangs ein Rollenschlepper an, der eine Reibungskraft sowie eine entgegen der Schwerkraft nach oben gerichtete Stützkraft ausübt und dafür sorgt, dass der Quarzglas-Strang langsam abgezogen wird. Die Höhe der Stütz- und Reibungskräfte und die Abzugsgeschwindigkeit bestimmen den Außendurchmesser des rohrförmigen Quarzglas-Strangs. Der Außendurchmesser des rohrförmigen Halbzeugs liegt im Bereich von 300 bis 600mm, die Wandstärke im Bereich von 20 bis 100mm und die Länge im Bereich von 10 bis 2000mm. Dieser wird zu rohrförmigen Teilstücken abgelängt, die für Quarzglas-Bauteile zum Einsatz in der Halbleiter- und Photovoltaikindustrie weiterverarbeitet werden, beispielsweise als Flansch oder Waferhalter.

Die Oberfläche des Quarzglasrohres ist mit der Ziehdüse und dem Rollenschlepper in Kontakt gekommen; das Quarzglas außerdem mit der Innenwand des Schmelztiegels.

Aus der KR 102132252 B1 ist die Herstellung dickwandiger Quarzglasrohre durch ein Formpress-Verfahren bekannt. Dabei wird aus einem Ausgangszylinder aus Quarzglas mit einem Außendurchmesser d1 ein vollzylindrischer Rohling mit einem kleineren Außendurchmesser d3 ausgeschnitten und dieser in einer Schmelzform unter Einsatz eines Pressstempels zu einem Hohlzylinder mit dem Außendurchmesser d1 und einem Innendurchmesser d2 umgeformt. Die Schmelzform gibt dabei den Außendurchmesser d1, und der als Kern dienende Pressstempel gibt den Innendurchmesser d2 vor. Die Schmelzform und der Pressstempel bestehen aus Grafit und die Formtemperatur liegt im Bereich von 1550-1800°C. Für den Außendurchmesser d1 wird der Wertebereich von 360-370mm angegeben, für den Innendurchmesser d2 der Bereich von 270-290mm, und für den kleineren Außendurchmesser d3 der Bereich von 20-150mm.

Die Oberfläche des Quarzglasrohres ist mit der Schmelzform und dem Pressstempel in Kontakt gekommen.

Technische Aufgabe

Infolge der Rotation des Hohlzylinders um seine Längsachse definieren die im Abstand dazu angeordneten Graphitplatten eine kreisrunde "Quasi-Öffnung", durch die hindurch das erweichte Quarzglas beim Umformprozess gezwängt wird. Die Graphitplatten führen zu Defekten, insbesondere spiralförmigen Streifen auf der Außenseite des abgezogenen Quarzglasrohres.

Infolge des Innen-Überdrucks Gasdrucks kann sich - in Zufuhrrichtung des Hohlzylinders zum Ofen gesehen - vor den Grafitplatten ein Umfangs-Wulst aus weichem Quarzglas aufbauen. Dessen Volumen unterliegt einem Erneuerungs-Mechanismus, bei dem beständig neues Glas aufgestaut und im gleichen Maß über den Rohrstrang abgezogen wird, da die Abzugsgeschwindigkeit des Rohrstrangs deutlich größer ist als die Vorschubgeschwindigkeit des Hohlzylinders. Dieses Geschwindigkeitsverhältnis bewirkt ein "Elongieren" des Hohlzylinders und geht zwangsläufig einher mit einer Reduktion der Glas-Querschnittsfläche des umgeformten Rohres gegenüber der des Ausgangs-Hohlzylinders.

Alle Versuche, mit der bekannten Methode Quarzglasrohre mit gleicher oder höherer Glas-Querschnittsfläche zu erzielen, sind bislang fehlgeschlagen. Dies kann darauf zurückgeführt werden, dass dafür eine Umkehrung des genannten Geschwindigkeitsverhältnisses erforderlich ist, also eine Abzugsgeschwindigkeit des Rohrstrangs, die kleiner ist als die Vorschubgeschwindigkeit des Hohlzylinders, was allgemein auch als "Stauchen" bezeichnet wird. Beim Stauchen funktioniert der oben erwähnte Erneuerungs-Mechanismus des Wulst-Volumens nicht mehr, da sich permanent mehr erweichtes Glasvolumen vor der "Quasi-Öffnung" aufstaut als abgezogen wird. Beim Umformen eines Hohlzylinders führt dieses "Schieben" des erweichten Glasvolumens gegen das Formwerkzeug entweder dazu, dass das Formwerkzeug kurzzeitig geöffnet werden muss, oder der Wulst wird in unregelmäßigen Zeitabständen nach innen durchgedrückt, oder er bleibt am Formwerkzeug kleben. Im ersten Fall kommt es zu Schwankungen in Innen- und Außendurchmesser, im zweiten Fall zu Schwankungen des Innendurchmessers, und im dritten Fall zum Abbruch des Umformprozesses. In jedem Fall ergibt sich ein instabiler Prozess.

Bedingt durch ihre kurze Heizzone ist bei flammenbasierten Heizzonen ein Stauchen des Ausgangs-Hohlzylinders in einem kleinen Umfang möglich, jedoch - wie oben bereits erwähnt - nur bei kleinen Wandstärken des umzuformenden Ausgangs-Hohlzylinders von weniger als 10 mm.

Es besteht somit ein Bedarf nach großen und gleichzeitig dickwandigen Quarzglasrohren mit guter Oberflächenqualität.

Die bei den bekannten Methoden eingesetzten Schmelzformen, Schmelztiegel und Formwerkzeuge bestehen aus einem hochtemperaturfesten Werkstoff, wie beispielsweise aus Grafit, Zirkon, Wolfram oder Molybdän. Durch den direkten Kontakt des Quarzglasrohres mit der Schmelzform beziehungsweise dem Formwerkzeug beim Umformprozess - also im heißen, erweichten Zustand - kann die Oberfläche beschädigt werden. Außerdem können Verunreinigungen aus den Schmelzformen beziehungsweise Schmelztiegel und Formwerkzeugen in das Quarzglas eingetragen werden. Diese können beim Schmelz- oder Umformprozess auch in Partikelform in das Volumen des Quarzglaskörpers gelangen. Beispielsweise ist es bei Tiegelziehverfahren unvermeidlich, dass sich bei Temperaturen um 1900°C Tiegelmaterial in Partikelform löst oder sich durch Kondensation aus der Gasphase solche Partikel in der einzuschmelzenden Sandschüttung bilden und schließlich im Volumen (bulk) des Glases landen. Bei Einsatz derartig belasteter Quarzglas-Bauteile in der Halbleiterfertigung führen die Partikel und Verunreinigungen zu Störungen und Ausfällen , insbesondere in sogenannten "Plasma-Ätzkammern". Durch das Ätzplasma wird das Quarzglas ebenfalls angegriffen und aufgelöst. Darin enthaltene Partikel werden unerwünschterweise freigesetzt. Ebenso führen gasgefüllte Blasen durch den Abbruch dünner Kanten zur Freisetzung von Partikeln.

Es ist somit Aufgabe der Erfindung, ein dickwandiges Rohr aus Quarzglas bereitzustellen, das möglichst keine Partikel und Blasen enthält, und dessen Oberfläche möglichst frei von Verunreinigungen und Beschädigungen ist.

Außerdem ist es Aufgabe der Erfindung, ein Verfahren für die Herstellung derartiger dickwandiger Quarzglasrohre anzugeben, und insbesondere ein Verfahren, das es erlaubt, dickwandige Ausgangs-Hohlzylinder aus Quarzglas mit Wandstärken von mehr als 20 mm zu dickwandigen Rohren mit größerem Durchmesser, aber etwa gleicher oder größerer Glas-Querschnittsfläche umzuformen.

Allgemeine Beschreibung der Erfindung

Diese Aufgabe wird hinsichtlich des Quarzglasrohres ausgehend von einem Quarzglasrohr mit den eingangs genannten Merkmalen erfindungsgemäß dadurch gelöst,
• dass für den Rohr-Außendurchmesser $T_a$, den Rohr-Innendurchmesser $T_i$ und die Rohr-Wanddicke $(T_a-T_i)/2$ gelten:

$$300\,mm < \quad T_a \quad < 550\,mm,$$
$$250\,mm < \quad T_i \quad < 450\,mm,$$
$$20\,mm < \quad (T_a-T_i)/2 \quad < 80\,mm,$$

• dass das Quarzglasrohr eine feuerpolierte Innenmantelfläche und eine feuerpolierte Außenmantelfläche aufweist,
• und dass das Quarzglas des Quarzglasrohres eine Doppelbrechung von weniger als 20 nm/cm aufweist, gemessen in einem Abstand von 0,4mm unterhalb der Außenmantelfläche über eine Messlänge von 10cm.

Das erfindungsgemäße Quarzglasrohr zeichnet sich durch Eigenschaften aus, die jede für sich betrachtet üblich sind, aber in ihrer Kombination einzigartig und nicht ohne Weiteres einstellbar sind. Diese Eigenschaften betreffen die Rohrgeometrie, genauer gesagt die Dickwandigkeit, die Oberflächenqualität genauer gesagt die weitgehende Abwesenheit von Oberflächenschäden, und den Belastungszustand, genauer gesagt den Grad der mechanischen Spannung im Bereich der Außenmantelfläche des Rohres. Der technische Nutzen der Eigenschafts-Kombination und deren Besonderheiten werden nachfolgend näher erläutert.

(1) Das Quarzglasrohr hat einen großen Außendurchmesser und ist dabei dickwandig. Das heißt, seine Wanddicke $(T_a-T_i)/2)$ beträgt mehr als 20mm, vorzugsweise mehr als 40mm, besonders bevorzugt mehr als 60mm, aber nicht mehr als 80mm. Bei Außendurchmessern von mehr als 80mm bereitet das freie Umformen zunehmend Schwierigkeiten und ist daher nicht bevorzugt. Bevorzugte Bereiche für die Rohr-Wanddicke liegen zwischen 25mm und 55mm, und besonders bevorzugt zwischen 30mm und 50mm.
Dickwandige Quarzglasrohre werden für eine Vielzahl von Anwendungen benötigt, beispielsweise werden daraus Flanschringe oder Ätzringe gefertigt.

(2) Es hat infolge eines Umformprozesses im Schmelzfluss erzeugte Innen- und Außenmantelflächen, die glatt und frei von Beschädigungen und Anhaftungen sind . Diese Qualität der Oberfläche wird hier als "feuerpoliert" bezeichnet.

Beschädigungen und Anhaftungen an der Außenmantelfläche können das Handling des Quarzglasrohres und insbesondere seine Weiterverarbeitung beeinträchtigen. Insbesondere bei der mechanischen Bearbeitung können von Oberflächen und da besonders von der Außenmantelfläche des Quarzglasrohres Risse ausgehen. Die feuerpolierte Oberfläche des erfindungsgemäßen Quarzglasrohres vermeidet dies.

Dadurch, dass sowohl die Innenmantelfläche als auch die Außenmantelfläche feuerpoliert sind, werden sowohl bereits beim Umformprozess als auch bei der späteren Qualitätsprüfung Fehler in der Rohrwandung leicht erkannt, wie beispielsweise Blasen oder Partikel.

(3) Außer durch "Feuerpolitur" sind für Glas-Bauteile auch Polierverfahren durch Ätzen in Säure oder Lauge oder mechanische Polituren üblich. Beim Feuerpolieren wird die Bauteil-Oberfläche erhitzt, so dass eine dünne Oberflächenschicht zu fließen beginnt und sich unter Einwirkung der Oberflächenspannung glättet. Als Heizquelle sind Gasbrenner und Laser gebräuchlich.

Quarzglas zeichnet sich durch einen besonders kleinen thermischen Ausdehnungskoeffizienten aus und hat daher grundsätzlich eine gute Temperaturwechselbeständigkeit. Es hat sich aber gezeigt, dass dickwandige Quarzglasrohre beim Feuerpolieren mittels Brennerflamme oder Laserstrahl reißen und daher auf diese Weise nicht oder jedenfalls nicht reproduzierbar feuerpoliert werden können. Daher sind ohne besondere Maßnahmen nur "dünnwandige" Rohre mit einer Wanddicke von weniger als 15mm großflächig feuerpolierbar, oder andere kleinteilige Bauteile, wie beispielsweise Ringe oder kurze Rohrsegmente.

Die "Feuerpolitur" des erfindungsgemäßen dickwandigen Quarzglasrohres beruht daher auf einem Umformprozess, bei dem die gesamte Glasmasse der Rohrwandung erweicht wird. Die Rohrwandung ist rissfrei und die Mantelflächen innen und außen sind glatt.

Ein Ausdruck für die im Umformprozess bewirkte Feuerpolitur ist die Spannungs-Doppelbrechung des Quarzglases beim erfindungsgemäßen Quarzglasrohr im Bereich der Außenmantelfläche. Diese beträgt weniger als 20 nm/cm und bevorzugt weniger als 18 nm/cm. Demgegenüber wird bei einer nachträglichen Feuerpolitur mittels Heizbrenner oder Laser in einem Abstand von 0,4mm unterhalb der Außenmantelfläche und über eine Messlänge von 10cm eine Doppelbrechung oberhalb dieses Wertes gemessen.

Die trotz feuerpolierter Außenmantelfläche geringe Spannungs-Doppelbrechung des erfindungsgemäßen Quarzglasrohres erleichtert zum einen dessen Handling bei nachfolgenden Verfahrensschritten und insbesondere die mechanische Bearbeitung wie beispielsweise beim Ablängen von Teilstücken. Denn etwaige Risse gehen in aller Regel von der Oberfläche aus, insbesondere wenn diese spannungsbelastet ist. Die im Umformprozess feuerpolierte Oberfläche beim erfindungsgemäßen Quarzglasrohr ist somit einerseits frei von Mikrorissen und sie ist andererseits vergleichsweise niedrig spannungsbelastet, so dass bei einer Zerteilung des Quarzglasrohres keine Brüche induziert werden und die mechanische Belastbarkeit hoch ist.

(4) Eine vergleichsweise hohe Spannungs-Doppelbrechung im Bereich der Außenmantelfläche ergibt sich auch, wenn ein $SiO_2$-haltiger Belag auf der Außenmantelfläche des Quarzglasrohres nachträglich mittels Brenner oder Laser durch Verglasen eliminiert wird. Derartige $SiO_2$-haltige Beläge können sich bei einem Umformprozess bilden, indem aufgrund hoher Temperatur sublimiertes SiO oder $SiO_2$ sich auf kühleren Oberflächen und unter Reaktion mit Wasser oder Sauerstoff als $SiO_2$ niederschlägt. Beim erfindungsgemäßen Quarzglasrohr ist die Außenmantelfläche vorzugsweise frei von derartigen Belägen. Dies kann durch Einsatz einer Inertgasspülung beim Umformprozess erreicht werden, die geeignet ist, SiO- und $SiO_2$-Dampf aus der Heizzone zu entfernen. Dies wird weiter unten noch anhand des erfindungsgemäßen Verfahrens erläutert.

Diese Belagfreiheit und die sowohl auf Innenseite als auch auf der Außenseite feuerpolierte Oberfläche ermöglicht eine sehr gute Inspektion der Glasqualität im Hinblick auf Partikeleinschlüsse und Blasen, ohne dass dafür die Oberfläche mit einer Beschichtung oder einer Immersionsflüssigkeit bedeckt werden muss, um sie transparent zu machen. Der damit einhergehende Aufwand und die Kontamination werden so vermieden.

Das erfindungsgemäße Quarzglasrohr besteht vorzugsweise aus synthetisch erzeugtem $SiO_2$ mit einem vergleichsweise geringen Hydroxylgruppengehalt von weniger als 300 Gew.-ppm. Der geringe Hydroxylgruppengehalt bewirkt eine geringere optische Absorption und führt damit zu einer geringeren Aufheizung im Einsatz beim Einsatz des Quarzglasrohres beziehungsweise eines aus dem Quarzglasrohr hergestellten Bauteils bei Hochtemperatur-Anwendungen, beispielsweise bei der Plasma-Ätzbehandlung eines Wafers.

Das erfindungsgemäße Quarzglasrohr hat vorzugsweise eine Länge von mindestens 1,8m, vorzugsweise mindestens 2m, insbesondere mindestens 2,5m und ganz besonders bevorzugt mindestens 3m.

Die vergleichsweise große Länge erleichtert die Inspektion in Bezug auf Blasen und Partikel beim Umformprozess und die Selektion etwaiger Längenabschnitte mit Maßabweichungen oder Glasfehlern bei der nachträglichen Qualitätskontrolle.

Ein Eintrag von Verunreinigungen in das Quarzglas infolge des Umformprozesses ist weitgehend ausgeschlossen.

Dies zeigt sich darin, dass das Quarzglas des erfindungsgemäßem Quarzglasrohres Verunreinigungen in einer Konzentration von jeweils weniger als 10 Gew.-ppb enthält, wobei die Verunreinigungen Zirkon, Wolfram und Molybdän sind.

Zirkon, Wolfram und Molybdän sind typische Refraktärwerkstoffe, wie sie bei bekannten Tiegelzieh- und Formschmelzverfahren eingesetzt werden. Das Quarzglas des Quarzglasrohres ist vorzugsweise frei von Partikeln aus Zirkon, Wolfram und Molybdän mit einer Größe von mehr als 0,001 mm . insbesondere enthält das Quarzglas vorzugsweise weniger als einen Partikel größer als 1$\mu$m aus Zirkon, Wolfram oder Molybdän pro 100kg Quarzglas.

Derartige Partikel können durch Abrieb aus Schmelzbehältern, Düsen oder anderen Formteilen in das Quarzglas gelangen. Sie werden im Quarzglasrohr mikroskopisch erfasst..

Das erfindungsgemäße Quarzglasrohr kann vorteilhaft als Halbzeug für die Herstellung von Quarzglas-Ringen eingesetzt werden, die als Ätzringe für einen Einscheibenreaktor für die Behandlung eines Wafers oder als Flansche verwendet werden.

Ätzringe werden während des Plasmaätzprozesses um den Wafer und seine Bodenhalterung "Chuck" herumgelegt und schützen den Wafer und den Chuck seitlich vor den HF-haltigen Plasmagasen. Dabei wird der Ätzring ebenfalls abgeätzt. Die aus dem Quarzglas resultierenden Ätzprodukte SiF und $O_2$ sind unbedenklich für die Halbleiter-Chips und werden in der Gasphase abgeführt. Kritisch sind hingegen Metalle, die sich auf den Chiparchitekturen niederschlagen können und Ausschuss generieren. Die Metalle lagern sich auch in der Plasmaätzkammer ab und bedingen ein häufigeres Reinigen der Kammer was zu Produktionsausfall führt. Die Ätzringe können dagegen ohne ein Öffnen der Kammer automatisch gewechselt werden. Ebenfalls kritisch für den Halbleiterfertigungsprozess sind Partikel, welche aus den Ätzringen bei deren Verbrauch freigesetzt werden können.

Die feuerpolierte Oberfläche erleichtert die Inspektion und Selektion im Fertigungsprozess der Ätzringe, so dass diese einen niedrigen Blasengehalt haben. Blasen können ebenfalls eine Partikelgeneration im Plasmaätzprozess hervorrufen, da sobald der Ätzring teilweise verbraucht ist und existierende Blasen freigelegt werden, die scharfen Blasenkanten extreme Spitzen im elektrischen Feld der Plasmakammer generieren und Glaspartikel über Entladungen aus dem Blasenkante herausgebrochen werden.

Hinsichtlich des Verfahrens wird die oben genannte technische Aufgabe ausgehend von dem Verfahren der eingangs genannte Gattung erfindungsgemäß dadurch gelöst, dass der Gasdruck als Stellgröße einer Durchmesser-Regelung und/oder einer Durchmesser-Steuerung für den Rohr-Außendurchmesser oder für einen mit dem Rohr-Außendurchmesser korrelierten geometrischen Parameter verwendet wird und dass in einer Druckaufbauphase der Gasdruck von einem niedrigeren Anfangswert auf einen höheren Endwert allmählich erhöht wird, und dass für das Verhältnis von Vc und $V_T$ gilt: $V_T$ = Vc $\pm$ 0,2·Vc, , wobei in den Ofen-Innenraum Inertgas eingeleitet wird.

Der Ausgangs-Hohlzylinder - oder kurz: Hohlzylinder - besteht aus Quarzglas. Dieses kann aus natürlich vorkommenden Rohstoffen erschmolzen sein, vorzugsweise besteht er aber aus synthetisch erzeugtem $SiO_2$. Dieses wird durch Abscheidung aus der Gasphase erhalten (CVD-Prozesse) und hat somit keinen Kontakt zu einem Schmelzbehältnis und enthält daher auch keinerlei Fremdpartikel. Der nachfolgende Umformprozess ohne Formwerkzeug erhält diesen partikelfreien Zustand im Quarzglasrohr. Das Quarzglas ist undotiert oder es enthält einen Dotierstoff oder mehrere Dotierstoffe. Der Hohlzylinder ist - ebenso wie das durch den Umformprozess zu erzeugende erfindungsgemäße Quarzglasrohr - dickwandig; das heißt, seine Wandstärke beträgt beispielsweise mehr als 20 mm, mehr als 40 mm, mehr als 60 mm oder mehr als 80 mm. Besonders vorteilhaft besteht der Hohlzylinder aus synthetisch erzeugtem $SiO_2$ mit einem vergleichsweise geringen Hydroxylgruppengehalt von weniger als 300 Gew.-ppm.

Beim Umformprozess ist der Ausgangs-Hohlzylinder im Wesentlichen so orientiert, dass seine Hohlzylinder-Längsachse vorzugsweise horizontal verläuft. Ergebnis des Umformverfahrens ist ein Rohrstrang, aus dem ein Quarzglasrohr oder mehrere Quarzglasrohre mit der gewünschten Länge abgeschnitten werden. Die Begriffe "Rohr" und "Rohrstrang" werden hier insoweit synonym verwendet. Das Quarzglasrohr hat einen größeren Außendurchmesser und einen größeren Innendurchmesser als der Ausgangs-Hohlzylinder. Sofern zwischen Innendurchmesser und Außendurchmesser nicht ausdrücklich unterschieden werden muss, wird im Folgenden für beide Abmessungen auch der Sammelbegriff "Durchmesser" oder "Radialgeometrie" verwendet. Die "Radialgeometrie" des Ausgangs-Hohlzylinders wird auch als "Startgeometrie" bezeichnet und die "Radialgeometrie" des Rohrstrangs als "Zielgeometrie".

Ziel des Umformprozesses ist ein Quarzglasrohr mit einer Glas-Querschnittsfläche, die etwa gleich groß oder sogar größer ist als die Glas-Querschnittsfläche des Ausgangs-Hohlzylinders. Als Glas-Querschnittsfläche wird die von Glas belegte Fläche in einem Schnitt senkrecht zur Rohr-Längsachse bezeichnet.

Die Zielgeometrie, insbesondere der Rohrstrang-Außendurchmesser, ist die Sollgröße einer Regelung beziehungsweise einer Steuerung. Die Regelung erfolgt rechnergesteuert anhand von Messwerten zur Sollgröße, die Steuerung kann auch mindestens teilweise durch Einstellungen aufgrund von abgelesenen Parameterwerten von Hand erfolgen. Es gibt auch Kombinationen von Regelung und Steuerung, beispielsweise bei einer Regelung mit Vorsteuerung. Sofern nicht ausdrücklich ausgeschlossen, stehen die Begriffe "Regelung" oder "regeln" im Folgenden als Sammelbegriffe auch für "Steuerung" beziehungsweise "steuern" und auch für Kombinationen dieser Maßnahmen.

Der erfindungsgemäße Umformprozess unterscheidet sich von der bisherigen Verfahrensweise in mindestens vier Aspekten.

(i) Auf den Einsatz eines Formwerkzeugs wird aus dem oben erläuterten Grund verzichtet. Denn das "Schieben" des erweichten Glasvolumens durch die "Quasi-Öffnung" des Formwerkzeugs würde zu einem instabilen Prozess führen, bei dem sich immer mehr erweichtes Glasvolumen vor dem Formwerkzeug aufstaut und zu Welligkeiten im Rohrstrang führt. Hierbei wird ein Schwanken der Querschnittsfläche beobachtet, das nicht durch die Berechnung aus Stauchrate (Verhältnis von Vorschubgeschwindigkeit zu Abzugsgeschwindigkeit) und Querschnitt des Ausgangs-Hohlzylinders bestimmt werden kann.

Durch den Wegfall des Formwerkzeugs ergeben sich zwar Vorteile: die Rohr-Oberfläche ist glatt und feuerpoliert. Und eine chemische Kontamination des Glases durch den Werkstoff des Formwerkzeugs kann ausgeschlossen werden. Die feuerpolierte Oberflächenqualität erleichtert außerdem die Inspektion beim Fertigungsprozess und sie vermindert die Bruchgefahr, so dass das Quarzglasrohr in großer Länge vorliegen kann, was eine wirtschaftliche Ausselektion von nicht der Geometriespezifikation oder der visuellen Qualität (beispielsweise wegen Blasen) entsprechenden Rohrstücken ermöglicht.

Allerdings bedarf es einer anderen Regelung für den Rohrstrang-Durchmesser, um durch freies Formen die gewünschte Zielgeometrie zuverlässig und präzise herstellen zu können. Beim erfindungsgemäßen Verfahren wird daher der Gasdruck als Stellgröße einer Durchmesser-Regelung und/oder einer Durchmesser-Steuerung für den Rohrstrang-Außendurchmesser oder für einen mit dem Rohr-Außendurchmesser korrelierten geometrischen Parameter unmittelbar oder mittelbar verwendet. Eine mittelbare Verwendung in diesem Sinne liegt beispielsweise vor, wenn die Stellgröße nicht der Gasdruck ist, sondern ein mit dem Gasdruck korrelierter Parameter, wie die Durchflussmenge eines Druckgases. Innen- und/oder Außendurchmesser des abgezogenen Rohrstrangs werden dabei gemessen oder abgelesen.

Mit dem Rohr-Außendurchmesser korrelierte geometrische Parameter sind beispielsweise der Innendurchmesser und die Wandstärke des Rohres. Der Rohr-Außendurchmesser ist optisch erfassbar. Der Innendurchmesser ergibt sich über die Querschnittsfläche und die Stauchrate (Verhältnis von Vorschubgeschwindigkeit zu Abzugsgeschwindigkeit). Voraussetzung dafür ist ein stabiler Prozess, bei dem es nicht zu Änderungen der Querschnittsfläche kommt.

Die Umformung des Hohlzylinders beruht auf dem Gasdruck oder auf der Zentrifugalkraft beim Rotieren (Schleudern) oder auf beiden Wirkungen. Den Anteil des Gasdrucks an der Tangentialspannung σT in der Rohrwand beschreibt die sogenannte Kesselformel:

$$\sigma T = \text{Druck*Radius/Wanddicke} \qquad (1),$$

mit: Druck = Gasdruck
Radius = Rohrradius im Verformungsbereich
Wanddicke = Wandstärke im Verformungsbereich

Im "Verformungsbereich" ändern sich Wandstärke, Durchmesser und Temperatur (Viskosität) kontinuierlich. Beispielsweise nimmt der Durchmesser des erweichten Glasstrangs in Abhängigkeit vom Verformungswiderstand des Glases, der insbesondere von der Wanddicke und der Viskosität bestimmt wird, vom Hohlzylinder zum Rohr hin kontinuierlich zu. Im Längsschnitt zeigt der Verformungsbereich insgesamt Trichterform mit einem mehr oder weniger ausgeprägt S-förmigen Übergang zwischen Hohlzylinder und Rohr, der im Folgenden auch als "Schulter" bezeichnet wird. In der Praxis hat der Verformungsbereich typischerweise eine Länge von mehreren 100 Millimetern, zum Beispiel 200 bis 800 mm, häufig etwa 500 mm.

Die Tangentialspannung wiederum bewirkt die Einstellung des Rohrradius (r) im Verformungsbereich nach der Differenzialgleichung:

$$\text{dRadius/dt=Spannung*Radius/Viskosität} \qquad (2).$$

mit: dRadius/dt = Dehngeschwindigkeit
Spannung = Tangentialspannung
Radius = Rohrradius im Verformungsbereich
Viskosität = Über die Wanddicke gemittelter Wert der örtlichen Viskosität

(ii) Zu jedem vorgegebenen Parametersatz (Radialgeometrie von Ausgangs-Hohlzylinder und Rohrstrang sowie Prozessparametern, wie Vorschub- und Abzugsgeschwindigkeiten, Gasdruck und Temperaturverteilung im Verformungsbereich) existiert nur eine stabile, stationäre Schulterform, die sich als Lösung der Differenzialgleichung (2) ergibt. Nur der dieser Berechnung zugrunde liegende Wert für den Gasdruck führt im Idealfall ausgehend von Startgeometrie und in Abhängigkeit von den Prozessparametern zu der Zielgeometrie.

Dieser Wert für den Gasdruck kann der Regelung beziehungsweise der Steuerung der Radialgeometrie des Rohrstrangs als nominaler Anfangswert zugrunde gelegt werden (sofern der Gasdruck als Stellgröße der Regelung/Steuerung mindestens hilfsweise verwendet wird). Es hat sich aber gezeigt - und dies ergibt sich auch aus der obigen Gleichung (2) - dass sich jede Druckänderung nicht nur an einer Stelle, sondern an allen Stellen des Verformungsbereichs auswirkt, und zwar je nach den aktuellen lokalen Gegebenheiten unterschiedlich stark. Deshalb führt jede Druckänderung zu Schwankungen in der Zielgeometrie, die aber erst viel später, also nach sehr langer Totzeit, sichtbar werden und die nicht mehr ausregelbar sind. Die Regelung kann dabei leicht in einen instabilen, oszillierenden Zustand geraten, der zu einem Rohrstrang mit Wellenstruktur führt.

Die lange Totzeit lässt sich herstellungsbedingt kaum verkürzen. Daher wird vorgeschlagen, auf abrupte Druckänderungen zu verzichten, wie sie beispielsweise zu Beginn eines Umformprozesses zwecks Einstellung des Gasdrucks auf seinen nominalen Anfangswert vorgenommen werden könnten. Stattdessen wird vorgeschlagen, den Gasdruck während einer Druckeinstellphase von einem niedrigeren Anfangswert auf einen höheren Endwert allmählich zu erhöhen. Allmählich bedeutet dabei, dass der Gasdruck stetig - in möglichst kleinen Schritten oder im Idealfall kontinuierlich - erhöht wird. Der Anfangswert ist ein Druckwert, der Null beträgt oder der deutlich unterhalb des Gasdruck-Endwerts liegt, und der Endwert ist ein Druckwert, der im Bereich des Stellwerts für die Regelung/Steuerung der Zielgeometrie liegt. Während der Druckaufbauphase findet der Umformprozess bereits statt, das heißt, es wird kontinuierlich Quarzglasmaterial des Ausgangs-Hohlzylinder in Quarzglasmaterial des Rohrstrangs umgeformt, obwohl dieser seine vorgegeben Radial- Geometrie noch nicht erreicht hat.

Für jedes Paar von Ausgangs- und Zielgeometrie existiert eine maximal mögliche Rampe, um nicht in einen instabilen, oszillierenden Zustand zu geraten. Diese kann mit der Differentialgleichung (2) kalkuliert werden. Diese maximal mögliche Rampe ist ein Idealwert. Höhere Druckerhöhungsrampen können zu einer Verschlechterung in Bezug auf die Konstanz des abgezogenen Außendurchmessers (Oszillationen) und/oder zu einem höheren Materialverlust führen. Andererseits sind niedrigere Druckerhöhungsrampen als der Idealwert in Bezug auf die Konstanz des Außendurchmessers (Oszillationen) unschädlich. Das Gegenteil ist der Fall; eine diesbezügliche Untergrenze konnte nicht festgestellt werden. Allerdings hat eine niedrigere Druckerhöhungsrampe eine lange Zeitspanne bis zur Einstellung des vorgegebenen Gasdruck-Endwerts und damit des Durchmesser-Sollwerts zur Folge, was mit Zeit- und Materialverlust einhergeht, da sich bis dahin die vorgegebene Radial-Geometrie des Rohes nicht eingestellt hat und das bis dahin erzeugte Rohrmaterial nur Materialverlust darstellt. Daher gibt es ein ökonomisches Motiv, die Druckerhöhungsrampe so groß wie möglich einzustellen. Zwar nicht der Zeitverlust, aber der Materialverlust kann verringert werden, indem ein Ausgangs-Hohlzylinder eingesetzt wird, bei dem das vordere Ende aus Dummy-Material mit geringerer Qualität besteht.

(iii) Ein Ziel des Umformprozesses ist ein Rohr mit größerem Durchmesser als der Ausgangs-Hohlzylinder aber etwa gleicher oder größerer Glas-Querschnittsfläche. Dafür ist das Verhältnis von Abzugsgeschwindigkeit $V_T$ des Rohrstrangs und Vorschubgeschwindigkeit Vc des Ausgangs-Hohlzylinders so einzustellen, dass gilt: $V_T = Vc \pm 0{,}2 \cdot Vc$.

Beim hier vorliegenden Umformprozess liegt demnach die Abzugsgeschwindigkeit $V_T$ im Bereich der Vorschubgeschwindigkeit Vc oder sie ist sogar kleiner als diese. Im Unterschied dazu ist beim Elongieren eines Ausgangszylinders zu einem Rohrstrang die Vorschubgeschwindigkeit zur Heizzone wesentlich niedriger als die Abzugsgeschwindigkeit des Rohrstrangs aus der Heizzone. Dadurch ergibt sich beim Elongieren eine gewisse Eigenstabiltät des Ziehprozesses, die die Einstellung und Regelung der Radialgeometrie des Rohrstrangs erleichtert. Allerdings unterscheiden sich beim Elongieren die Glas-Querschnittsflächen von Ausgangszylinder und Rohrstrang in der Regel wesentlich. Die dem Elongierprozess gegebene Eigenstabilität kann beim vorliegenden Umformprozess nicht eintreten. Diesen Nachteil kompensiert das erfindungsgemäße Verfahren anhand der oben erläuterten Maßnahmen (i) und (ii).

(iv) Während des Umformprozesses wird in den Ofen-Innenraum kontinuierlich oder von Zeit zu Zeit (bei Bedarf) ein Inertgas eingeleitet.

Das Inertgas ist beispielsweise Stickstoff oder Argon oder ein Gemisch dieser Gase. Durch Einleiten des Intergasstroms in den Ofen-Innenraum wird der Ausbildung eines $SiO_2$-haltigen Belag auf der Außenmantelfläche des Quarzglasrohres entgegengewirkt oder die Ausbildung des Belags wird sogar verhindert. Derartige $SiO_2$-haltige Beläge können sich bei einem Umformprozess bilden, indem aufgrund hoher Temperatur sublimiertes $SiO_2$ oder SiO sich auf kühleren Stellen der Außenmantelfläche und unter Reaktion mit Wasser oder Sauerstoff als $SiO_2$ niederschlägt. Andernfalls müsste der Belag, um eine feuerpolierte Oberfläche zu erhalten, nachträglich durch Verglasen mittels eines Heizbrenners oder eines Lasers eliminiert werden.

Auf diese Weise können aus dickwandigen Quarzglas-Hohlzylindern durch freies Formen erstmals Rohre mit Wandstärken von mehr als 20 mm erzeugt werden, deren Glas-Querschnittsfläche gleich oder größer ist als die des Ausgangs-Hohlzylinders und die eine feuerpolierte Außenmantelfläche aufweisen.

Eine übliche Regelung auf die Zielgeometrie des Rohrstrangs würde ausgehend von dem niedrigen Gasdruck-Anfangswert eine möglichst schnelle Einstellung des Gasdruck-Endwerts bewirken, was allerdings aus dem vorher erläuterten Grund zu Prozessinstabilitäten und einem oszillierenden Zustand führen kann Die allmähliche Erhöhung des Gasdrucks in der Druckaufbauphase erfolgt daher bevorzugt unabhängig von der Durchmesser-Regelung beziehungsweise unabhängig von der Durchmesser-Steuerung.

Im einfachsten Fall wird der Gasdruck manuell in kleinen Stufen erhöht, bis der Soll-Gasdruck erreicht ist. Alternativ dazu wird der Gasdruck linear oder auf Basis einer nicht-linearen Funktion gesteuert erhöht, bis der Soll-Gasdruck erreicht ist. Unabhängig von einer regulären Durchmesser-Regelung erfolgt die allmähliche Erhöhung des Gasdrucks in der Druckaufbauphase allerdings vorzugsweise ebenfalls durch eine Regelung.

Der regulären Durchmesser-Regelung beziehungsweise -Steuerung wird ein Durchmesser-Sollwert für den Rohr-Außendurchmesser und/oder für den Rohr-Innendurchmesser zugewiesen, wobei dem Durchmesser-Sollwert ein Soll-Gasdruck zugeordnet ist. Dabei ist es vorteilhaft, wenn der niedrigere Anfangswert im Bereich von 0 bis 50% des Soll-Gasdrucks, vorzugsweise im Bereich von 10 bis 30% des Soll-Gasdrucks, und der höhere Endwert im Bereich von 70 bis 110% des Soll-Gasdrucks, vorzugsweise im Bereich von 90 bis 100% des Soll-Gasdrucks liegen.

Es hat sich als vorteilhaft erwiesen, wenn der Ofen-Innenraum ein freies Gasvolumen aufweist, und das Inertgas mit einem Volumenstrom in den Ofen-Innenraum eingeleitet wird, der pro Minute im Bereich von 1/10 bis 1/2 , vorzugsweise im Bereich von 1/5 bis 1/3 des freien Gasvolumens liegt.

Der Inertgasstrom bewirkt einen kontinuierlichen oder zeitweisen Austausch des Gases im Ofen-Innenraum. Er verhindert so die Anreicherung von sublimiertem SiO oder $SiO_2$ und den Niederschlag eines Feststoffbelags auf dem abgezogenen Rohrstrang und bewirkt stattdessen die Abfuhr aus dem Ofen-Innenraum. Der Volumenstrom ist so bemessen, dass er pro Minute 1/10 bis 1/2, vorzugsweise 1/5 bis 1/3 des freien Gasvolumens des Ofen-Innenraums austauschen kann. Das freie Gasvolumen ist das Volumen des Ofen-Innenraums abzüglich des dem Quarzglasrohr und dem Quarzglaszylinder zuzurechnenden Glasvolumens innerhalb der Innenraums.

Bei einem Volumenstrom von weniger als 1/10 ist der Gasaustausch unter Umständen zu gering, um diese Wirkung zu erfüllen. Ein Volumenstrom von mehr als 1/2 des freien Gasvolumens kann die Temperatur und den Druck im Ofen-Innenraum und damit die Regelung/Steuerung in unerwünschter Weise beeinflussen.

Die Druckaufbauphase ist dem eigentlichen Umformprozess vorgeschaltet. Zu Beginn der Druckaufbauphase hat der Hohlzylinder die Erweichungstemperatur erreicht und die Prozessparameter, wie die Temperatur der Heizzone, die Vorschubgeschwindigkeit und die Abzugsgeschwindigkeit, sind so eingestellt, wie sie im eigentlichen Umformprozess zu erwarten sind. Während der Druckaufbauphase wird der Gasdruck in der Hohlzylinder-Innenbohrung (und damit auch in der Rohrstrang-Innenbohrung) beginnend mit dem niedrigeren Anfangs-Druckwert langsam auf den Endwert erhöht. Erst wenn der Soll-Gasdruck erreicht ist, wird ein Rohrstrang mit der Zielgeometrie erzeugt. Das bis dahin umgeformte Rohrstrang-Material ist Verlust. Der Materialverlust kann vermindert werden, wenn das Anfangsstück des Ausgangs-Hohlzylinders aus minderwertigem Quarzglas besteht. Unabhängig davon sollte die Druckaufbauphase so kurz wie möglich und nur so lang wie nötig sein, um einerseits den Materialverlust gering zu halten und andererseits durch eine flache Druckerhöhungsrampe einen stabilen Zustand des Umformprozesses zu erreichen. Um trotz flacher Druckerhöhungsrampe die Druckaufbauphase möglichst kurz zu halten, ist ein gewisser Anfangswert des Gasdrucks oberhalb von Null bis etwa 50% des Soll-Gasdrucks, vorzugsweise bis maximal 30% des Soll-Gasdrucks vorteilhaft.

Der Soll-Gasdruck liegt beispielsweise im Bereich von 1 bis 20 mbar, vorzugsweise im Bereich von 1,2 bis 15 mbar, und besonders bevorzugt im Bereich von 1,5 bis 10 mbar. Ein besonders hoher Gasdruck von mehr als 20 mbar kann die Prozessstabilität beeinträchtigen.

Andererseits ist es nicht unbedingt erforderlich, dass die Druckerhöhung in der Druckaufbauphase exakt zum Soll-Gasdruck führt. Denn die reguläre Durchmesser-Regelung beziehungsweise -Steuerung kann die Druckeinstellung übernehmen, wenn mindestens 70%, vorzugsweise mindestens 90% des Soll-Gasdrucks erreicht sind, oder auch wenn der Druck bereits geringfügig größer als der Soll-Gasdruck ist.

Es ist abzuwägen zwischen einer möglichst kurzen Druckaufbauphase und damit einem möglichst geringen Materialverlust einerseits und einer möglichst flachen Druckerhöhungsrampe und damit einer exakten Einstellung der Zielgeometrie mit wenig Durchmesserschwankungen andererseits. Als besonders geeigneter Kompromiss hat es sich erwiesen, wenn die Druckaufbauphase eine Dauer zwischen 1 und 120 Minuten, vorzugsweise eine Dauer zwischen 5 und 100 Minuten, besonders bevorzugt eine Dauer zwischen 10 und 80 Minuten, und insbesondere eine Dauer zwischen 15 und 60 Minuten hat.

Aus diesen Erwägungen heraus ergibt sich auch der zeitliche Verlauf der Druckerhöhung in der Druckaufbauphase. Die Druckerhöhung kann beispielsweise mit konstanter Steigung (linear) erfolgen oder sie kann einen nichtlinearen Verlauf mit am Ende abnehmender oder zunehmender Steigung haben. Es hat sich als günstig erwiesen, wenn der Gasdruck in der Druckaufbauphase mindestens zeitweise mit einer zeitlichen Rampe $\Delta p$ erhöht wird, für die gilt: $0,01$ mbar/min $< \Delta p < 0,8$ mbar/min, vorzugsweise: $\Delta p < 0,5$ mbar/min und insbesondere $\Delta p < 0,2$ mbar/min.

Unabhängig vom zeitlichen Verlauf der Druckerhöhung in der Druckaufbauphase kann der Druckerhöhungs-Rampe auch ein Mittelwert über die gesamte Druckaufbauphase zugeordnet werden. Dabei wird der Gasdruck während der gesamten Druckaufbauphase bevorzugt mit einer mittleren zeitlichen Rampe $\Delta p_m$ erhöht, für die gilt: $0,01$ mbar/min $< \Delta p_m < 0,5$ mbar/min, vorzugsweise: $\Delta p_m < 0,1$ mbar/min und insbesondere $\Delta p_m < 0,06$ mbar/min.

Das Umformverfahren ist besonders geeignet für die industrielle Herstellung großvolumiger und dickwandiger Quarzglas-Rohre. Im Hinblick darauf haben der Hohlzylinder (cylinder; C) und der Rohrstrang (tube; T) vorzugsweise folgende Radial-geometrie:

$$150 \text{ mm} < \quad Ca \quad < 300 \text{ mm},$$
$$30 \text{ mm} < \quad C_i \quad < 180 \text{ mm},$$
$$40 \text{ mm} < \quad (C_a-C_i)/2 \quad < 100 \text{ mm}$$
$$300 \text{ mm} < \quad T_a \quad < 500 \text{ mm},$$
$$250 \text{ mm} < \quad T_i \quad < 450 \text{ mm},$$
$$20 \text{ mm} < \quad (T_a-T_i)/2 \quad < 60 \text{ mm}.$$

Der Umformprozess führt zu einem Quarzglasrohr mit größerem Außendurchmesser und größerem Innendurchmesser als beim Ausgangs-Hohlzylinder. Für den Hohlzylinder und für den Rohrstrang ergeben sich dabei vorzugsweise folgende Beziehungen miteinander:

$$4 \cdot C_i < \quad T_i \quad < 8 \cdot C_i,$$
$$C_a +100 \text{ mm} < \quad T_a \quad < Ca+ 300 \text{ mm}$$

Besonders bevorzugt liegt der Rohr-Außendurchmesser $T_a$ im Bereich des 1,5-fachen bis 2,2-fachen des Hohlzylinder-Außendurchmessers $C_a$.

Der Umformprozess ist außerdem besonders geeignet zur Herstellung von Quarzglas-Rohren mit großem Durchmesser und etwa gleicher oder größerer Glas-Querschnittsfläche wie der Ausgangs-Hohlzylinder. Zwischen der Glasquerschnittsfläche Ac des Ausgangs-Hohlzylinders und der Glasquerschnittsfläche $A_T$ des Rohrstrangs gibt es dabei vorteilhafterweise folgenden Zusammenhang:
$A_T = A_C \pm 0,15 \cdot A_C$, vorzugsweise: $0,90 \cdot A_C \leq A_T \leq 1,15 \cdot A_C$, insbesondere: $A_C \leq A_T \leq 1,10 \cdot A_C$.

Dabei liegen die Glasquerschnittsflächen Ac und $A_T$ vorzugsweise im Bereich von 250 bis 1000 cm$^2$.

Beim Elongieren eines Ausgangszylinders zu einem Rohstrang ist dessen Vorschubgeschwindigkeit zur Heizzone wesentlich niedriger als die Abzugsgeschwindigkeit des Rohrstrangs aus der Heizzone. Dadurch ergibt sich beim Elongieren eine gewisse Eigenstabltät des Ziehprozesses, die die Einstellung und Regelung der Radialgeometrie des Rohrstrangs erleichtert. Allerdings unterscheiden sich die Glas-Querschnittsflächen von Ausgangszylinder und Rohrstrang wesentlich. Im Unterschied dazu liegt beim hier vorliegenden Umformprozess die Abzugsgeschwindigkeit des Rohrstrangs im Bereich der Vorschubgeschwindigkeit oder sie ist sogar kleiner als diese. Dadurch kann die in dem Elongierprozess gegebene Eigenstabilität nicht eintreten. Diesen Nachteil vermeidet das erfindungsgemäße Verfahren, wobei für das Verhältnis von Vc und $V_T$ vorzugsweise gilt:

$$0,8 \cdot V_C \leq V_T \leq 1,05 \cdot V_C,$$

insbesondere: $0,9 \cdot V_C \leq V_T \leq 0,99 \cdot V_C$.

Die Wanddicke des Rohrstrangs wird bestimmt durch das Verhältnis der Geschwindigkeiten $V_C$ und $V_T$. Ist dieses Geschwindigkeitsverhältnis kleiner als 1, wird der Rohrstrang nicht elongiert, sondern es kommt zu einer Aufstauchung.

Es hat sich gezeigt, dass bei einem vergleichsweise geringen Durchsatz an Glasmasse Prozess-Instabilitäten einfacher zu vermeiden sind. Im Hinblick darauf hat es sich bewährt, wenn Vc so eingestellt wird, dass sich ein Durchsatz an Quarzglasmasse von mindestens 30 kg/h aber weniger als 60 kg/h und vorzugsweise weniger als 45 kg/h ergibt.

Ausführungsbeispiel

Nachfolgend wird die Erfindung anhand eines Ausführungsbeispiels und einer Zeichnung näher erläutert. Im Einzelnen zeigt

**Figur 1** eine Vorrichtung zum Umformen eines Hohlzylinders aus Quarzglas in ein Quarzglasrohr in einer Seitenansicht und in schematischer Darstellung,

**Figur 2** ein Foto eines Quarzglasrohr-Abschnitts beim Ausfahren aus einem Heizofen während einer Druckeinstellphase eines Umformprozesses gemäß einem ersten Vergleichsbeispiel,

**Figur 3** ein Diagramm mit Profilen von Außendurchmesser und Wanddicke des umgeformten Quarzglasrohr-Abschnitts von Figur 2,

**Figur 4**    ein Diagramm mit dem zeitlichen Verlauf des Gasdrucks während der Startphase des Umformprozesses und danach beim ersten Vergleichsbeispiel,

**Figur 5**    ein Foto eines Quarzglasrohr-Abschnitts beim Ausfahren aus einem Heizofen während eines Umformprozesses gemäß einem zweiten Vergleichsbeispiel,

**Figur 6**    ein Foto eines Quarzglasrohr-Abschnitts beim Ausfahren aus einem Heizofen während eines Umformprozesses gemäß einem ersten Ausführungsbeispiel der Erfindung,

**Figur 7**    ein Diagramm mit Profilen von Außendurchmesser und Wanddicke des umgeformten Quarzglasrohr-Abschnitts von Figur 6,

**Figur 8**    ein Diagramm mit dem zeitlichen Verlauf des Gasdrucks während der Startphase des Umformprozesses und danach beim ersten Ausführungsbeispiel,

**Figur 9**    ein Diagramm mit Profilen von Außendurchmesser und Wanddicke beim Referenzbeispiel,

**Figur 10**    ein Diagramm mit dem zeitlichen Verlauf des Gasdrucks während des Umformprozesses beim Referenzbeispiel, und

**Figur 11**    ein Foto der Wandung eines dickwandigen Quarzglasrohres in einer Ansicht auf die Außenmantelfläche mit Rissen durch versuchte Feuerpolitur.

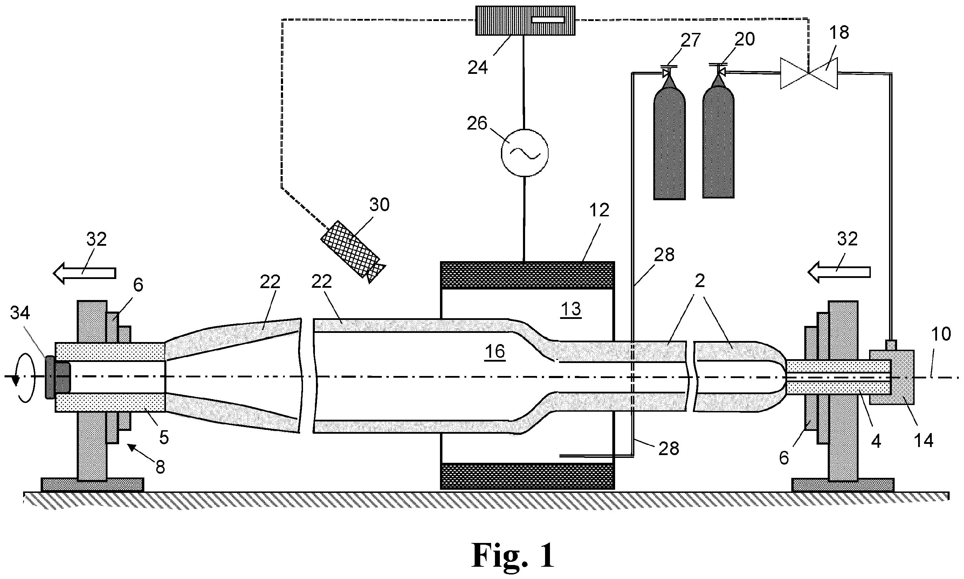

**Figur 1** zeigt schematisch eine Vorrichtung zum Umformen eines Quarzglas-Hohlzylinders 2 zu einem Rohr 22. Der Hohlzylinder 2 besteht aus synthetisch erzeugtem, undotiertem Quarzglas. Er wird nach dem sogenannten OVD-Verfahren (Outside Vapor Deposition) in einem Sootabscheideprozess hergestellt. Dabei wird eine flüssige oder gasförmige Ausgangssubstanz einer chemischen Reaktion (Hydrolyse oder Pyrolyse) unterzogen und aus der Gasphase als festes $SiO_2$ auf einem rotierenden Dorn abgeschieden. Die Ausgangssubstanz ist beispielsweise Siliziumtetrachlorid $(SiCl_4)$ oder eine chlorfreie Siliziumverbindung. Als Zwischenprodukt wird ein poröser $SiO_2$-Sootkörper in Hohlzylinderform erhalten, dessen Innenbohrung durch den später entfernten Dorn ausgeformt worden ist. Durch Verglasen des Sootkörpers wird der Hohlzylinder 2 aus synthetischem Quarzglas erhalten.

An die Stirnseiten des umzuformenden Hohlzylinders 2 aus Quarzglas werden Halterohre 4, 5 angeschweißt, die in Spannfutter 6 einer horizontalen Glasdrehbank 8 eingespannt sind und die synchron um die Rotationsachse 10 rotieren. Das in Vorschubrichtung 32 vordere Halterohr 4 wird mittels eines Stopfens 34 verschlossen. In das andere Halterohr 5 kann ein Druckgas eingeleitet werden.

Der Hohlzylinder 2 wird mittels der Glasdrehbank 8 kontinuierlich und unter Rotation um seine Rotations- und Längsachse 10 mit einer vorgegebenen Zufuhrgeschwindigkeit in den Innenraum 13 eines Widerstandsofens 12 geschoben, der den Hohlzylinder 2 ringförmig umgibt und der darin zonenweise auf eine Temperatur um 2100 °C aufgeheizt wird. Der Widerstandsofen 12 ist über eine regelbare Stromquelle 26 mit einem Rechner 24 verbunden.. Während des Umformprozesses wird in den Ofen-Innenraum 13 ein zeitlich konstanter Stickstoffstrom von eingeleitet, der pro Minute 24% des freien Innenraum-Volumens ausmacht. Dazu ragt eine mit einem Stickstoff-Druckbehälter 27 verbundene Leitung 28 in den vorderen und kühleren Bereich des Ofeninnenraums 13.

Durch einen Gaseinlass 14 kann in die Innenbohrung 16 von Hohlzylinder 2 und Rohr 22 ein Druckgas eingeleitet und ein definierter Gasdruck eingestellt werden. Der Gaseinlass 14 ist mit einem regelbaren Ventil 18 ist mit einem Druckgasbehälter 20 und mit dem Rechner 24 verbunden.

Getrieben durch die Zentrifugalkraft und den Gasdruck wird die niedrig-viskose Masse des Quarzglas-Hohlzylinders 2 auf den Soll-Durchmesser des Quarzglasrohres 22 aufgeblasen. Zur Messung des sich einstellenden Außendurchmessers und für eine Außendurchmesser-Regelung ist eine Mess- und Regeleinrichtung vorgesehen, die eine hochauflösende CCD-Kamera 30 umfasst, die auf den Rohrstrang 22 gerichtet ist. Die von der Kamera 30 erfassten Messdaten werden fortlaufend an den Rechner 24 übertragen, auf dem ein Bilddatenverarbeitungsprogramm installiert ist, mittels dem der aktuelle Außendurchmesser des Rohrstrangs 22 ermittelt wird. Dieser wird als Ist-Wert der Regelgröße (Rohrstrang-Außendurchmesser) in die Regelung eingespeist, deren Stellgröße der Gasdruck ist. Gasleitungen sind schematisch durch Doppellinien, Stromleitungen durch Einfachlinien und Datenleitungen durch gestrichelte Linien markiert.

Im Folgenden werden anhand Figur 1 Beispiele des Umformprozesses erläutert.

Vergleichsbeispiel 1

| | |
|---|---|
| $C_a$ | 220mm |
| $C_i$ | 43mm |
| Vorschub Vc | 7,5 mm/min |
| Abzug $V_T$ | 7,4 mm/min |
| Formwerkzeug | Ohne |
| Durchsatz | 36kg/h |
| Ziel $T_a$ | 363mm |
| Ziel $T_i$ | 290mm |
| Ziel-Wanddicke | 36,5 mm |
| Heizleistung | ca. 740kW |
| Drehzahl | 10U/min |
| Glasfläche $A_c$ | 365 cm$^2$ |
| Glasfläche $A_T$ | 374 cm$^2$ |
| Gasaustausch durch die Ofeninnenraum-Spülung | 24% / min |

In diesem Vergleichsbeispiel wurde der Ausgangs-Hohlzylinder 2 unter Rotation um seine Längsachse 10 in den Heizofen 12 eingefahren und der Längenabschnitt des Ausgangs-Hohlzylinders 2 im Heizofen 12 gleichmäßig aufgeheizt, Danach wurde der Gasdruck auf denjenigen Wert eingestellt, der zum Erreichen des vorgegebenen Rohrstrang-Außendurchmessers anhand der Gleichung (2) berechnet worden ist (Soll-Gasdruck). Der Soll-Gasdruck beträgt in dem Fall 3 mbar. Gleichzeitig wurde der Vorschub auf 7,5 mm/min eingeschaltet und das freie Rohrstrang-Ende mit der vorgegebenen Abzugsgeschwindigkeit von 7,4 mm/min abgezogen.

Das führte nach einiger Zeit zu einer zu schnellen Zunahme des Rohrstrang-Außendurchmessers, so dass der Gasdruck auf 1 mbar abgesenkt werden musste, um zu verhindern, dass das Glas in Kontakt mit dem Heizrohr des Widerstandsofens 12 kommt. Dies führte nach einiger Zeit zu einer rapiden Verringerung des Rohrstrang-Außendurchmessers, so dass der Druck wieder auf 4 mbar erhöht werden musste. Es stellte sich jedoch kein stabiler Zustand ein und die Zielgeometriekonnte bis zum Ende des Umformprozesses nicht erreicht werden.

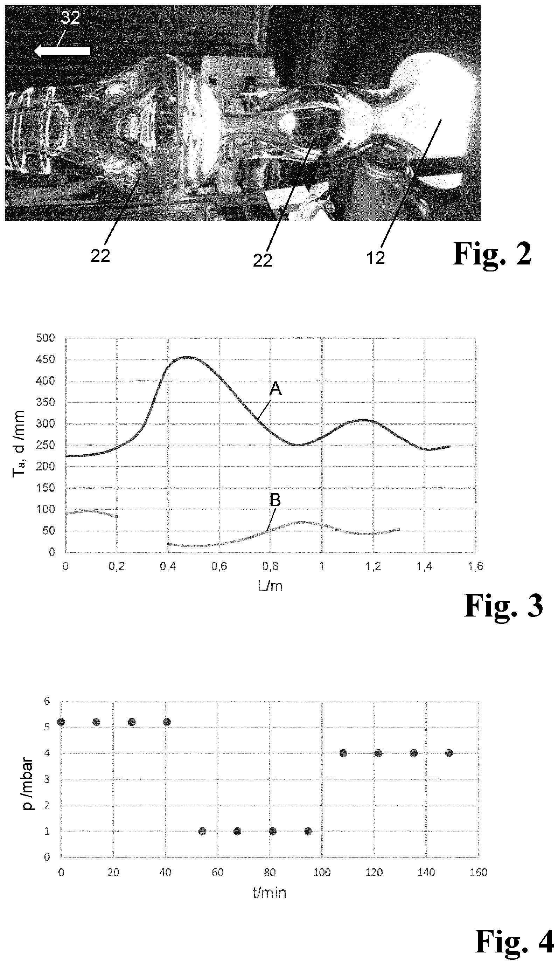

**Figur 2** zeigt ein Foto des aus dem Heizofen 12 auslaufenden Rohrstrangs 22. Die Unregelmäßigkeit des Außendurchmessers ist unmittelbar zu erkennen.

Das Diagramm von **Figur 3** zeigt die entsprechenden Verläufe von Außendurchmesser und Wanddicke. Auf der y-Achse sind der Durchmesser $T_a$ und die Wanddicke d in Millimeter aufgetragen und auf der x-Achse die Länge L des abgezogenen Rohrstrangs in Meter. Kurve A repräsentiert den Verlauf des Außendurchmessers und Kurve B den der Wanddicke (die infolge der starken Durchmesserschwankungen nicht durchgehend messbar war).

Das Diagramm von **Figur 4** zeigt den oben erläuterten zeitlichen Verlauf des Gasdrucks. Auf der y-Achse ist der Druck p in mbar aufgetragen und auf der x-Achse die Zeit t in Minuten.

Vergleichsbeispiel 2

| | |
|---|---|
| $C_a$ | 220mm |
| $C_i$ | 43mm |
| Vorschub Vc | 7,5 mm/min |
| Abzug $V_T$ | 7,4 mm/min |
| Formwerkzeug | Kontakt bei 363mm Außendurchmesser |
| Durchsatz | 36kg/h |
| Ziel $T_a$ | 363mm |
| Ziel $T_i$ | 290mm |
| Ziel-Wanddicke | 36,5 mm |
| Leistung | ca. 740kW |
| Drehzahl | 10 U/min |
| Glasfläche $A_c$ | 365 cm$^2$ |
| Glasfläche $A_T$ | 374 cm$^2$ |
| Gasaustausch durch die Ofeninnenraum-Spülung | 24% / min |

In diesem Vergleichsbeispiel wurde in den Heizofen-Innenraum 13 ein Formwerkzeug eingebaut, das den Außendurchmesser des abgezogenen Rohrstrangs 22 vorgeben sollte. Der Ausgangs-Hohlzylinder 2 wurde unter Rotation um seine Längsachse 10 in den Heizofen 12 eingefahren und der Längenabschnitt des Ausgangs-Hohlzylinders 2 im Heizofen 12 gleichmäßig aufgeheizt. Der Vorschub wurde auf 7,5 mm/min eingeschaltet und das freie Rohrstrang-Ende mit der vorgegebenen Abzugsgeschwindigkeit von 7,4 mm/min abgezogen. Der Gasdruck wurde zunächst auf 4mbar fest eingestellt. Es wurde versucht, gegen das Formwerkzeug abzuformen, die auf einen Außendurchmesser von 363mm eingestellt waren. Beim ersten Kontakt mit dem Formwerkzeug begann das Quarzglas jedoch sich zu verdrillen. Anschließend wurde der Druck auf 2mbar gesenkt und danach mit einer flachen Rampe von 1mbar/h (ca. 0,017mbar/min) wieder hochgefahren. Trotz mehrerer Versuche, den Umformprozess zu stabilisieren wurde, das vorgegebene Zielmaß nicht erreicht und das Formwerkzeug musste letztendlich geöffnet werden, um die Quarzglasmasse zu befreien.

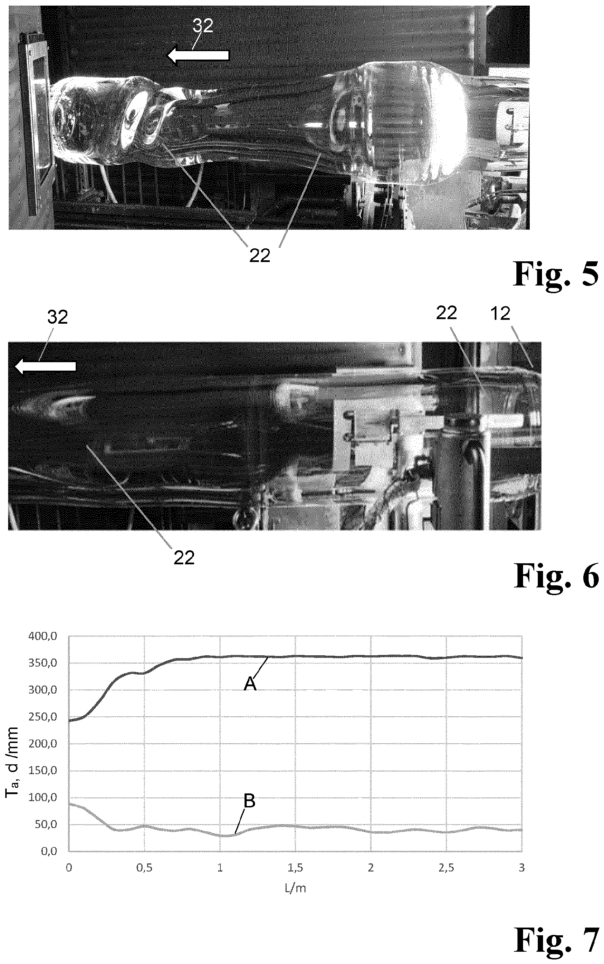

Das Foto von **Figur 5** zeigt die Verdrillungen und Unregelmäßigkeiten im Außendurchmesser des bis dahin abgezogenen Rohrstrangs.

<div align="center">Beispiel 1</div>

| | |
|---|---|
| $C_a$ | 220mm |
| $C_i$ | 43mm |
| Vorschub $V_C$ | 7,5 mm/min |
| Abzug $V_T$ | 7,4 mm/min |
| Formwerkzeug | Ohne |
| Durchsatz | 36kg/h |
| Ziel $T_a$ | 363mm |
| Ziel $T_i$ | 290mm |
| Ziel-Wanddicke | 36,5 mm |
| Leistung | ca. 740kW |
| Drehzahl | 10U/min |
| Glasfläche $A_c$ | 365 cm$^2$ |
| Glasfläche $A_T$ | 374 cm$^2$ |
| Gasaustausch durch die Ofeninnenraum-Spülung | 24% / min |

In Beispiel 1 wurde der Ausgangs-Hohlzylinder 2 unter Rotation um seine Längsachse 10 in den Heizofen 12 eingefahren und der anfängliche Gasdruck wurde auf 1mbar eingestellt und während des Aufheizens konstant gehalten. Nachdem der Längenabschnitt des Ausgangs-Hohlzylinders 2 im Heizofen 12 gleichmäßig aufgeheizt war, wurde der Vorschub auf 7,5 mm/min eingeschaltet und das freie Rohrstrang-Ende mit der vorgegebenen Abzugsgeschwindigkeit von 7,4 mm/min abgezogen. Gleichzeitig wurde der Anfangswert des Gasdrucks mit einer geregelten Rampe von 0,06 mbar/min solange erhöht, bis der Gasdruck seinen Endwert von 5,3 mbar erreicht hatte. Dieser Endwert entspricht gleichzeitig genau dem anhand der Gleichung (2) berechneten Soll-Gasdruck. Die Druckaufbauphase war damit beendet und der Rohrstrang 22 nahm den gewünschten Außendurchmesser von 363 mm ein. und. Bis dahin - in der Druckaufbauphase - war die eigentliche Durchmesser-Regelung über den Rechner 24 nicht aktiviert. Anschließend wurde die Regelung für den Außendurchmesser eingeschaltet, um die Geometrie im gewünschten Bereich zu halten. Der Gasdruck diente dabei der Regelung als Stellgröße. Durch das Aufblasen des ursprünglichen kleineren Volumens der Hohlzylinder-Innenbohrung auf das größere Volumen der Rohr-Innenbohrung ist zur Aufrechterhaltung des Gasdrucks, der zum Rohr-Außendurchmesser Ziel-$T_a$ führt, eine fortlaufende Gaszufuhr erforderlich.

**Figur 6** zeigt ein Foto des aus dem Heizofen auslaufenden Rohrstrangs 22. Dieser hat einen im Wesentlichen konstanten Außendurchmesser und eine glatte Wandung mit einer infolge des beschriebenen Umformprozesses erzeugten, feuerpolierten und deswegen störungsfreien Oberfläche. Auf der Oberfläche ist kein Belag zu erkennen. Dies wird auf die Stickstoff-Spülung (27; 28) des OfenInnenraums 13 zurückgeführt.

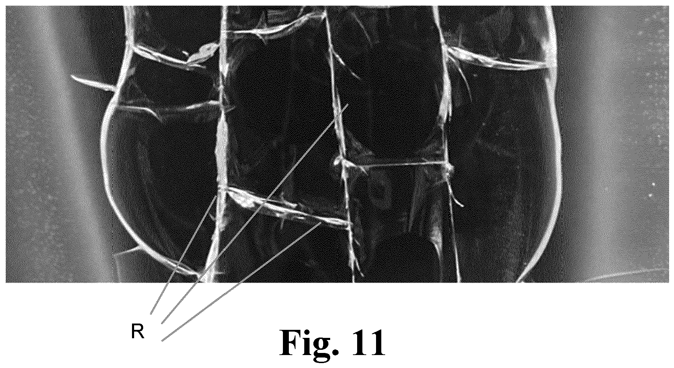

In einem Vergleichstest mit den gleichen Prozessparametern wie bei Beispiel 1, jedoch mit ausgeschalteter Stickstoff-Spülung (27; 28), wurde ein weißlicher Belag auf der Außenmantelfläche des abgezogenen Rohrstrangs 22 beobachtet. Der Belag konnte zwar mittels einer Brennerflamme verglast und beseitigt und damit eine feuerpolierte Außenmantelfläche realisiert werden; jedoch haben sich dabei in der Wandung des dickwandigen Quarzglasrohres Risse gebildet, wie in **Figur 11** dargestellt. Diese Rissbildung kann darauf zurückgeführt werden, dass es wegen der geringen Wärmeleitfähigkeit des Glases nicht gelingt, das dickwandige Quarzglasrohr durchzuheizen. Die aufzuheizende Glasmasse ist zu groß. Selbst wenn die Außenmantelfläche erweicht ist, ist die Innenmantelfläche noch kalt. Das führt trotz des geringen Ausdehnungskoeffizienten zu starken Spannungen und zu Rissbildung.

Das Diagramm von **Figur 7** zeigt die Verläufe von Außendurchmesser und Wanddicke von Beispiel 1. Auf der y-Achse sind der Durchmesser $T_a$ und die Wanddicke d in Millimeter aufgetragen und auf der x-Achse die Länge L des abgezogenen Rohrstrangs in Meter. Kurve A repräsentiert den Verlauf des Außendurchmessers und Kurve B den der Wanddicke.

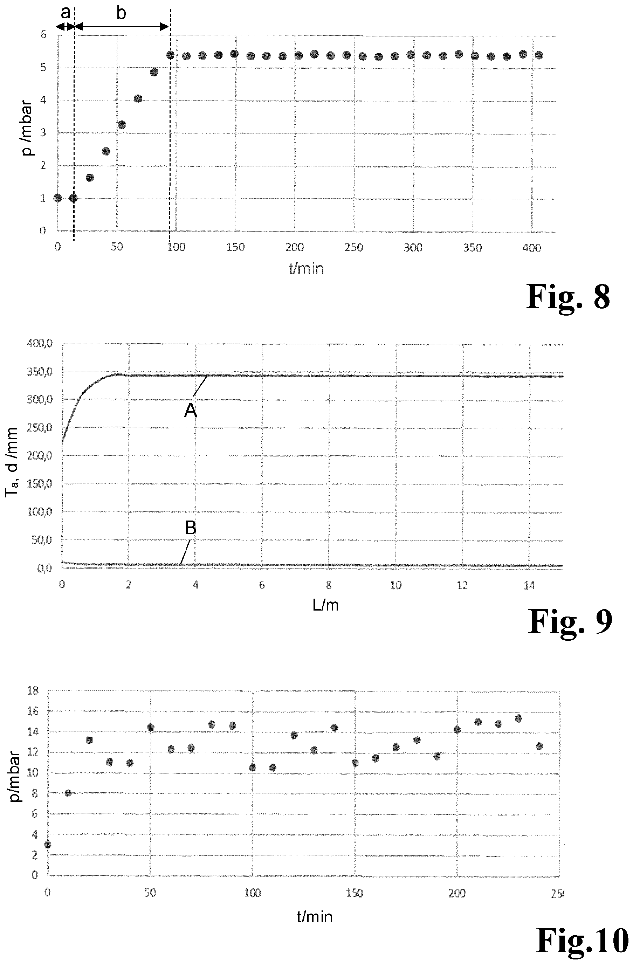

Das Diagramm von **Figur 8** zeigt den oben erläuterten zeitlichen Verlauf des Gasdrucks. Auf der y-Achse ist der Druck p in mbar aufgetragen gegen die Zeit t in Minuten. Die Druckaufbauphase ist durch die Zeitspanne a mit dem anfänglich konstanten Druckanfangswert von 1 mbar und die anschließende Zeitspanne b mit einer langsamen Erhöhung des Gasdrucks bis auf den Endwert von 5,3 mbar definiert. Während der Druckaufbauphase ist die Durchmesserregelung inaktiv.

Aus dem abgezogenen Rohrstrang 22 wurden dickwandige Rohre aus synthetischem Quarzglas mit großem mittlerem Außendurchmesser um 363 mm, einem großen mittleren Innendurchmesser von 290 mm und gleichzeitig mit einer großen mittleren Wanddicke um 36,5 mm abgelängt. Diese zeichnen sich durch infolge des Umformprozesses im Schmelzfluss erzeugte, glatte und weitgehend defektfreie Außen- und Innenmantelflächen aus.

<div align="center">Referenzbeispiel</div>

| | |
|---|---|
| $C_a$ | 220mm |
| $C_i$ | 45mm |
| Vorschub Vc | 12 mm/min |
| Abzug $V_T$ | 66 mm/min |
| Formwerkzeug | auf 343mm eingestellt |
| Durchsatz | 60kg/h |
| Ziel $T_a$ | 343mm |
| Ziel $T_i$ | 330mm |
| Ziel-Wanddicke | 6,5 mm |
| Leistung | ca. 800kW |
| Drehzahl | 20U/min |
| Glasfläche $A_c$ | 364 cm$^2$ |
| Glasfläche $A_T$ | 69 cm$^2$ |
| Gasaustausch durch die Ofeninnenraum-Spülung | 24% / min |

Das Referenzbeispiel entspricht dem Stand der Technik. Der dabei als Ausgangszylinder eingesetzte Hohlzylinder besteht aus nicht dotiertem Quarzglas, das aus natürlich vorkommenden Quarz-Rohstoffen nach der Verneuil-Methode erschmolzen worden ist. Dabei wird durch Aufschmelzen von kristallinem Quarzpulver unter Einsatz einer Knallgasflamme ein großer und langgestreckter Block erzeugt. Mittels einer mit Diamant-Abrasivpartikeln besetzten Kernbohrmaschine wird eine zentrale Bohrung erzeugt und die Innenwandung und Außenwandung abschließend mechanisch geglättet.

Bei diesem Umformprozess wird ein Formwerkzeug eingesetzt und der Rohrstrang wird unter Rotation um seine Längsachse aus der Heizzone und der erweichten Quarzglasmasse abgezogen (und nicht gestaucht). Nachdem der Längenabschnitt des Ausgangs-Hohlzylinders 2 im Heizofen 12 gleichmäßig aufgeheizt war, wurde der Vorschub auf 12 mm/min eingeschaltet und das freie Rohrstrang-Ende mit der vorgegebenen Abzugsgeschwindigkeit von 66 mm/min eingestellt. Gleichzeitig wurde der Gasdruck einer Rampe von 1 mbar/min sehr schnell erhöht und dabei von Hand geregelt. Das Glas wird mit dem Gasdruck gegen die Formbacken geblasen, welche auf einen Außendurchmesser von 343mm eingestellt sind.

Das Diagramm von **Figur 9** zeigt den zeitlichen Verlauf des Außendurchmessers und der Wanddicke (wie Figur 7). Es zeigt sich, dass infolge des Einsatzes des Formwerkzeugs der Außendurchmesser sehr konstant ist, und zwar trotz Schwankungen des Gasdrucks, wie aus **Figur 10** ersichtlich. Die Schwankungen des Gasdrucks wirken sich bei diesem Umformprozess auf den Außendurchmesser und auf die Wandstärke nicht nennenswert aus. Sie sind darauf zurückzuführen, dass nach Erreichen des Soll-Außendurchmessers der Gasdruck nur noch sehr grob manuell geregelt wird, um den Außendurchmesser im gewünschten Bereich zu halten.

An den Proben wurde die Spannungs-Doppelbrechung gemessen, um ein Maß für die mechanische Belastung der Quarzglasrohre zu erhalten. Es zeigte sich, dass die Doppelbrechung über die Wanddicke der Quarzglasrohre variiert und im Bereich der Außenmantelfläche ihr Maximum hat. Daher wurde der Wert der Spannungs-Doppelbrechung im Bereich der Außenmantelfläche als Referenzwert für die mechanische Belastung der Quarzglasrohre betrachtet und ausgewertet.

Zur Messung der Spannungs-Doppelbrechung wird ein linear polarisierter Laserstrahl mittels eines lambda/2 Plättchens in zirkular polarisiertes Licht umgewandelt. Dieses zirkular polarisierte Licht wechselwirkt dann mit den beiden durch die thermische Spannung induzierten optischen Achsen (schnelle Achse und langsame Achse). Mittels eines drehbaren Linearpolarisators wird das transmittierte Licht analysiert und der Gangunterschied zwischen den beiden optischen Achsen bestimmt. Der Gangunterschied wird danach auf die durchstrahlte Probendicke normiert und man erhält die Spannungsdoppelbrechung in nm/cm (d.h. Gangunterschied in nm pro cm Probendicke).

Rohrsegmente der Proben werden parallel zur Rohrachse durchstrahlt, das heißt, die Einkopplung des Messstrahls und dessen Austritt erfolgt über die Stirnflächen der Rohrsegmente etwa 0,4mm unterhalb der Zylindermantelfläche.. Die Probenlänge beträgt jeweils 10cm. Es werden jeweils 5 Messungen durchgeführt und daraus der arithmetische Mittelwert ermittelt. Als Messgerät wurde das kommerzielle Messgerät ABR-10A-40A der Fa. Uniopt mit einer Laserwellenlänge von 632,8nm verwendet. Die Messauflösung beträgt 0,01nm.

Die folgende Tabelle zeigt die Messergebnisse von Beispiel 1 im Vergleich mit Messergebnissen bei Vergleichsproben.

| Eigenschaft / Probe | A | B | C | D |
|---|---|---|---|---|
| Außendurchmesser [mm] | 365 | 480 | 235 | 235 |
| Wanddicke [mm] | 36 | 89 | 9,5 | 9,5 |
| Länge [mm] | 1940 | 1700 | >2000 | >2000 |
| Doppelbrechung [nm/cm] | 6,5 | 3,2 | 18,9 | 27,7 |
| OberflächenQualität | feuerpoliert | Fehler durch Schmelzform | geschliffen | feuerpoliert |
| Reinheit Al-Gehalt [Gew.-ppm] | <1 | <1 | 8-20 | 8-20 |
| Reinheit Mo-, W-, Zr- Gehalt [Gew.-ppb] | jeweils <10 | jeweils <10 | W: 60 Mo: <10 | W: 60 Mo: <10 |
| Partikel > 1$\mu$m Mo, W, Zr pro 100kg Glas | <1 | <1 | >10 | >10 |

Probe A ist ein Ringsegment aus dem dickwandigen Quarzglasrohr des oben erläuterten Beispiels 1 der Erfindung.

Probe B ist ein Ringsegment aus einem ebenfalls dickwandigen Quarzglasrohr, das durch Umformen in einer Schmelzform erzeugt worden ist (vergleichbar mit dem Stand der Technik gemäß der eingangs erläuterten KR 102132252 B1).

Probe C ist ein dünnwandiges Quarzglasrohr, das durch ein Tiegelziehverfahren erhalten worden ist (vergleichbar mit dem Stand der Technik gemäß der eingangs erläuterten CN 111792821, aber dünnwandig).

Probe D ist ein dünnwandiges Quarzglasrohr, das ebenfalls durch ein Tiegelziehverfahren erhalten worden ist und dessen Außenmantelfläche nachträglich mittels Heizbrenner feuerverglast worden ist.

Die in den Zeilen 7 und 8 genannten Metall-Konzentrationen wurden mittels ICP-OES gemessen. Die Nachweisgrenze für W und Mo liegt bei 10 Gew-ppb.

Die in Zeile 9 genannten Partikelzahlen wurden aus Faserziehversuchen bestimmt, wobei eine Partikelgröße größer 1$\mu$m zum Faserbruch führt. Die Bruchstellen wurden analysiert und die bruchauslösenden Partikel nach Größe und Zusammensetzung analysiert. Die Angabe der Partikel-Anzahl bezieht sich jeweils auf eine Masse von 100kg Quarzglas.

Eine geringe Aluminium-Konzentration von weniger al 1 Gew.-ppm ist durch Einsatz von synthetisch erzeugtem Quarzglas erreichbar. Bei der Halbleiterfertigung sind metallische Verunreinigungen grundsätzlich unerwünscht. Auch geringen Metallionengehalte können sich bei Fertigungsprozessen ungünstig auswirken; beispielsweise beim Plasmaätzen. Dabei können Al-Ionen oder Al-Verbindungen in gasförmiger Phase den Reaktor-Innenraum gelangen und sich auf dem zu bearbeitenden Wafer niederschlagen.

Probe D zeigt, dass durch die nachträgliche Feuerpolitur dem Quarzglasrohr eine hohe mechanische Belastung aufgeprägt wird, die sich im höchsten gemessenen Wert für die Spannungs-Doppelbrechung zeigt. Die durch Umformen eines Ausgangskörpers in einer Schmelzform erzeugte Probe B hat zwar eine geringere Spannungs-Doppelbrechung als Probe A; sie hat aber auch keine flammenpolierte Oberfläche. Nur die anhand Beispiel 1 hergestellte Probe A erfüllt alle Erfordernisse hinsichtlich Dickwandigkeit, Oberflächenqualität, Reinheit und Partikelfreiheit.

Der Rohrstrang gemäß Beispiel 1 der Erfindung wird in Teilstücke abgelängt, die 2m und länger sein können. Beim Ablängen können Längenabschnitte ausgeschnitten werden, die entweder nicht die erforderliche Maßhaltigkeit aufweisen, oder die Fehler haben, wie beispielsweise Blasen oder visuell erkennbare Partikel. Die Teilstücke können mechanisch weiterverarbeitet werden zu Ätzringen für RTP-Reaktoren (Rapid Thermal Processing) für die Behandlung von Wafern in Einscheibenreaktoren. Diese Ätzringe haben Ringhöhen von typischerweise 1 bis 3cm. Erst durch die Glattheit, Rissfreiheit und die geringe Spannungslast insbesondere im Bereich der Außenmantelfläche der erfindungsgemäßen Quarzglasrohre ist diese mechanische Bearbeitung ohne hohes Risiko der Zerstörung durch Rissbildung möglich.

**Patentansprüche**

1. Rohr aus Quarzglas mit einem Rohr-Außendurchmesser $T_a$, einem Rohr-Innendurchmesser $T_i$, einer Rohr-Wanddicke $(T_a-T_i)/2$, einer Außenmantelfläche und einer Innenmantelfläche, **dadurch gekennzeichnet,**

   • **dass** für den Rohr-Außendurchmesser $T_a$, den Rohr-Innendurchmesser $T_i$ und die Rohr-Wanddicke $(T_a-T_i)/2$ gelten:

$$300mm < T_a < 550mm,$$
$$250mm < T_i < 450mm,$$
$$20mm < (T_a-T_i)/2 < 80mm,$$

   • **dass** das Quarzglasrohr eine feuerpolierte Innenmantelfläche und eine feuerpolierte Außenmantelfläche aufweist,
   • und **dass** das Quarzglas des Quarzglasrohres eine Doppelbrechung von weniger als 20 nm/cm aufweist, gemessen in einem Abstand von 0,4mm unterhalb der Außenmantelfläche über eine Messlänge von 10cm.

2. Quarzglasrohr nach Anspruch 1, **dadurch gekennzeichnet, dass** es eine Doppelbrechung von weniger als 18 nm/cm aufweist.

3. Quarzglasrohr nach einem oder mehreren der vorhergehenden Ansprüche, **dadurch gekennzeichnet, dass** es eine Länge von mindestens 1,8m, vorzugsweise mindestens 2m, insbesondere mindestens 2,5m und ganz besonders bevorzugt mindestens 3m hat

4. Quarzglasrohr nach einem der Ansprüche 1 bis 3, **dadurch gekennzeichnet, dass** für die Rohr-Wanddicke $(T_a-T_i)/2$ gilt:

$$25mm < (T_a-T_i)/2 < 55mm, und besonders bevorzugt$$
$$30mm < (T_a-T_i)/2 < 50mm.$$

5. Quarzglasrohr nach einem oder mehreren der vorhergehenden Ansprüche, **dadurch gekennzeichnet, dass** das Quarzglas Verunreinigungen in einer Konzentration von jeweils weniger als 10 Gew.-ppb enthält, wobei die Verunreinigungen Zirkon, Wolfram und Molybdän sind.

6. Quarzglasrohr nach einem der vorhergehenden Ansprüche, **dadurch gekennzeichnet, dass** das Quarzglas weniger als einen Partikel größer als 1μm aus Zirkon, Wolfram oder Molybdän pro 100kg Quarzglas enthält.

7. Verfahren zur Herstellung eines Rohres (22) aus Quarzglas nach einem der Ansprüche 1 bis 6, durch Umformen eines Hohlzylinders (2), der eine Hohlzylinderbohrung (16), einen Außendurchmesser $C_a$, einen Innendurchmesser $C_i$ und eine Wandstärke aufweist, die mindestens 20 mm beträgt, indem dieser um eine Rotationsachse (10) rotierend kontinuierlich mit einer relativen Vorschubgeschwindigkeit Vc einer im Innenraum eines elektrisch beheizten Ofens ausgebildeten Heizzone (12) zugeführt, darin bereichsweise erweicht, und der erweichte Bereich unter der Wirkung eines in der Hohlzylinderbohrung (16) anliegenden Gasdrucks radial gedehnt und aus dem erweichten Bereich kontinuierlich ein Rohrstrang (22) mit einem Rohr-Außendurchmesser $T_a$, einem Rohr-Innendurchmesser $T_i$ und einer Rohr-Wanddicke geformt und mit einer Abzugsgeschwindigkeit $V_T$ abgezogen wird, **dadurch gekennzeichnet, dass** der Gasdruck als Stellgröße einer Durchmesser-Regelung (24) und/oder einer Durchmesser-Steuerung für den Rohr-Außendurchmesser oder für einen mit dem Rohr-Außendurchmesser korrelierten geometrischen Parameter verwendet wird und dass in einer Druckaufbauphase der Gasdruck von einem niedrigeren Anfangswert auf einen höheren Endwert allmählich erhöht wird, und dass für das Verhältnis von Vc und $V_T$ gilt: $V_T$ = Vc $\pm$ 0,2·$V_C$, wobei in den Ofen-Innenraum Inertgas eingeleitet wird.

8. Verfahren nach Anspruch 7, **dadurch gekennzeichnet, dass** der Ofen-Innenraum ein freies Gasvolumen aufweist, und dass das Inertgas mit einem Volumenstrom in den Ofen-Innenraum eingeleitet wird, der pro Minute im Bereich von 1/10 bis 1/2 , vorzugsweise im Bereich von 1/5 bis 1/3 des freien Gasvolumens liegt.

9. Verfahren nach Anspruch 7 oder 8, **dadurch gekennzeichnet, dass** der Durchmesser-Regelung beziehungsweise -Steuerung ein Durchmesser-Sollwert für den Rohr-Außendurchmesser und/oder für den Rohr-Innendurchmesser zugewiesen wird, und dass dem Durchmesser-Sollwert ein Soll-Gasdruck zugeordnet ist, und dass der niedrigere Anfangswert im Bereich von 0 bis 50% des Soll-Gasdrucks, vorzugsweise im Bereich von 10 bis 30% des Soll-Gasdrucks, und der höhere Endwert im Bereich von 70 bis 110% des Soll-Gasdrucks, vorzugsweise im Bereich von 90 bis 100% des Soll-Gasdrucks liegen, wobei bevorzugt der Soll-Gasdruck im Bereich von 1 bis 20 mbar, vorzugsweise im Bereich von 1,2 bis 15 mbar, und besonders bevorzugt im Bereich von 1,5 bis 10 mbar, eingestellt wird.

10. Verfahren nach einem oder mehreren der Ansprüche 7 bis 9, **dadurch gekennzeichnet, dass** die Druckaufbauphase eine Dauer zwischen 1 und 120 Minuten, vorzugsweise eine Dauer zwischen 5 und 100 Minuten, besonders bevorzugt eine Dauer zwischen 10 und 80 Minuten, und insbesondere eine Dauer zwischen 15 und 60 Minuten hat, und bevorzugt der Gasdruck in der Druckaufbauphase mindestens zeitweise mit einer zeitlichen Rampe $\Delta p$ erhöht wird, für die gilt:
0,01 mbar/min < $\Delta p$ < 0,8 mbar/min, vorzugsweise: $\Delta p$ < 0,5 mbar/min und insbesondere $\Delta p$ < 0,2 mbar/min.

11. Verfahren nach einem oder mehreren der Ansprüche 7 bis 10, **dadurch gekennzeichnet, dass** für den Hohlzylinder (2) und für den Rohrstrang (22) gelten:

| | | |
|---|---|---|
| 150 mm < | $C_a$ | < 300 mm, |
| 30 mm < | $C_i$ | < 180 mm, |
| 40 mm < | $(C_a-C_i)/2$ | < 100 mm |
| 300 mm | < $T_a$ | < 550 mm, |
| 250 mm | < $T_i$ | < 450 mm, |
| 20 mm < | $(T_a-T_i)/2$ | < 60 mm, |

wobei vorzugsweise der Rohr-Außendurchmesser $T_a$ im Bereich des 1,5-fachen bis 2,2-fachen des Hohlzylinder-Außendurchmessers $C_a$ liegt.

12. Verfahren nach einem oder mehreren der Ansprüche 7 bis 11, **dadurch gekennzeichnet, dass** der Ausgangs-Hohlzylinder (2) eine Glasquerschnittsfläche Ac und der Rohrstrang (22) eine Glasquerschnittsfläche $A_T$ aufweisen, wobei gilt:

$A_T$ = Ac $\pm$ 0,15·$A_C$, vorzugsweise: 0,90·$A_C$ ≤ $A_T$ ≤ 1,15·$A_C$, insbesondere: Ac ≤ $A_T$ ≤ 1,10·$A_C$, wobei vorzugsweise die Glasquerschnittsflächen Ac und $A_T$ im Bereich von 250cm$^2$ bis 1000cm$^2$ liegen.

13. Verfahren nach einem oder mehreren der Ansprüche 7 bis 12, **dadurch gekennzeichnet, dass** für das Verhältnis von Vc und $V_T$ gilt:
0,8·$V_C$ ≤ $V_T$ ≤ 1,05·$V_C$, insbesondere: 0,9·$V_C$ ≤ $V_T$ ≤ 0,99·$V_C$.

14. Verfahren nach einem oder mehreren der Ansprüche 7 bis 13, **dadurch gekennzeichnet, dass** Vc so eingestellt wird, dass sich ein Durchsatz an Quarzglasmasse von mindestens 30 kg/h aber weniger als 60 kg/h und vorzugsweise weniger als 45 kg/h ergibt.

15. Verwendung des Quarzglasrohres nach einem der Ansprüche 1 bis 6 oder eines nach dem Verfahren nach einem der Ansprüche 7 bis 14 hergestellten Quarzglasrohres zur Herstellung von Ringen aus Quarzglas, die als Ätzringe für einen Einscheibenreaktor für die Behandlung eines Wafers oder als Flansche eingesetzt werden.

EP 4 345 072 A1

**Fig. 1**

Fig. 2

Fig. 3

Fig. 4

**Fig. 5**

**Fig. 6**

**Fig. 7**

**Fig. 8**

**Fig. 9**

**Fig.10**

R

**Fig. 11**

Europäisches
Patentamt

European
Patent Office

Office européen
des brevets

## EUROPÄISCHER RECHERCHENBERICHT

**Nummer der Anmeldung**

**EP 22 19 8391**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 4 067 315 A1 (HERAEUS QUARZGLAS [DE]) 5. Oktober 2022 (2022-10-05) * Absätze [0005], [0064]; Ansprüche 1, 15 * ----- | 1 | INV. C03B23/07 C03C3/06 |
| X,D | JP 2007 001811 A (SUMITOMO METAL IND) 11. Januar 2007 (2007-01-11) * Absätze [0025], [0034], [0043], [0047]; Anspruch 2 * ----- | 1-15 | |
| A | US 2016/176747 A1 (GROMANN BORIS [DE] ET AL) 23. Juni 2016 (2016-06-23) * Absätze [0047], [0051], [0054]; Anspruch 6; Abbildung 4 * ----- | 7 | |

**RECHERCHIERTE SACHGEBIETE (IPC)**

C03B
C03C

Der vorliegende Recherchenbericht wurde für alle Patentansprüche erstellt

| Recherchenort | Abschlußdatum der Recherche | Prüfer |
|---|---|---|
| Den Haag | 17. Februar 2023 | Flügel, Alexander |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 8391

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2023

| Im Recherchenbericht angeführtes Patentdokument | Datum der Veröffentlichung | Mitglied(er) der Patentfamilie | Datum der Veröffentlichung |
|---|---|---|---|
| EP 4067315 A1 | 05-10-2022 | CN 115140926 A | 04-10-2022 |
| | | EP 4067315 A1 | 05-10-2022 |
| | | JP 2022153332 A | 12-10-2022 |
| | | KR 20220135166 A | 06-10-2022 |
| | | US 2022306513 A1 | 29-09-2022 |
| JP 2007001811 A | 11-01-2007 | JP 4892202 B2 | 07-03-2012 |
| | | JP 2007001811 A | 11-01-2007 |
| US 2016176747 A1 | 23-06-2016 | CN 105712617 A | 29-06-2016 |
| | | EP 3034477 A1 | 22-06-2016 |
| | | JP 2016135734 A | 28-07-2016 |
| | | KR 20160075348 A | 29-06-2016 |
| | | SG 10201510345R A | 28-07-2016 |
| | | TW 201625497 A | 16-07-2016 |
| | | US 2016176747 A1 | 23-06-2016 |
| | | US 2017327403 A1 | 16-11-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2010111557 A
- US 2017327403 A1
- JP 2007001811 A
- CN 111792821 A
- KR 102132252 B1
- CN 111792821